(19)

Europäisches Patentamt

European Patent Office

Office européen des brevets

(11) **EP 4 478 290 A1**

(12) **EUROPEAN PATENT APPLICATION**
published in accordance with Art. 153(4) EPC

(43) Date of publication:
**18.12.2024   Bulletin 2024/51**

(21) Application number: 23778043.2

(22) Date of filing: **24.03.2023**

(51) International Patent Classification (IPC):
**G06T 7/80** (2017.01)       **G01B 11/00** (2006.01)

(86) International application number:
**PCT/CN2023/083668**

(87) International publication number:
**WO 2023/185674 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:   **31.03.2022   CN 202210343947**

(71) Applicant: **Huawei Technologies Co., Ltd.
Shenzhen, Guangdong 518129 (CN)**

(72) Inventors:
• **WANG, Yiqin**
  **Shenzhen, Guangdong 518129 (CN)**

• **LI, Zhangcheng**
  **Shenzhen, Guangdong 518129 (CN)**
• **LI, Sikun**
  **Shenzhen, Guangdong 518129 (CN)**
• **LI, Chihhsin**
  **Shenzhen, Guangdong 518129 (CN)**
• **MA, Shaojun**
  **Shenzhen, Guangdong 518129 (CN)**
• **ZHAO, Wenbo**
  **Shenzhen, Guangdong 518129 (CN)**
• **CHEN, Yingyan**
  **Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **CALIBRATION METHOD, CALIBRATION SYSTEM, PHOTOGRAPHING METHOD, ELECTRONIC DEVICE AND STORAGE MEDIUM**

(57)   Embodiments of this application disclose a calibration method, a calibration system, a photographing method, an electronic device, and a storage medium, to implement calibration of a gradient variable aperture. The calibration method includes: obtaining a first aperture size of a to-be-calibrated aperture setting; determining a target position that is of an aperture motor and that corresponds to the first aperture size; after a rotor of the aperture motor is driven to move to the target position, obtaining a to-be-processed image including a light transmission hole of a variable aperture, and determining a second aperture size of the light transmission hole based on the to-be-processed image; if an error requirement is not met, determining a next target position of the aperture motor based on the first correspondence and the second aperture size, and then returning to the steps of obtaining a to-be-processed image and determining a second aperture size based on the to-be-processed image; or if the error requirement is met, determining that the target position is a motor calibration position of the to-be-calibrated aperture setting; and obtaining a relationship between an aperture setting and an aperture motor position based on a motor calibration position of each to-be-calibrated aperture setting.

FIG. 14

**Description**

This application claims priority to Chinese Patent Application No. 202210343947.7, filed with the China National Intellectual Property Administration on March 31, 2022 and entitled "CALIBRATION METHOD, CALIBRATION SYSTEM, PHOTOGRAPHING METHOD, ELECTRONIC DEVICE, AND STORAGE MEDIUM", which is incorporated herein by reference in its entirety.

**TECHNICAL FIELD**

This application relates to the field of imaging technologies, and in particular, to a calibration method, a calibration system, a photographing method, an electronic device, and a storage medium.

**BACKGROUND**

An aperture of a camera module is configured to control an amount of light admitted. An aperture opening size affects an amount of light admitted and a depth of field in an image system. Usually, a larger aperture opening size indicates a larger amount of light admitted, and a smaller aperture opening size indicates a smaller amount of light admitted. In addition, a wide aperture can implement clear imaging in a low-luminance scenario, and a depth of field of the wide aperture is shallow, so that background blur can be implemented, a shooting effect of a narrow aperture is sharper, and a depth of field of the narrow aperture is deeper.

A variable aperture is an aperture whose aperture opening size can be changed, to enable the camera module to change the aperture based on a requirement, so as to be applicable to different use scenarios. However, a current electronic device, especially a portable and miniaturized electronic device (for example, a mobile phone or a tablet computer), usually has no variable aperture. Even if some electronic devices have variable apertures, fixed aperture opening sizes are used instead of gradient variable apertures.

In other words, there is no gradient variable aperture image system having a plurality of aperture settings and no calibration solution for a gradient variable aperture in the current imaging technology.

**SUMMARY**

Embodiments of this application provide a calibration method, a calibration system, a photographing method, an electronic device, and a computer-readable storage medium, to implement calibration of a gradient variable aperture.

According to a first aspect, an embodiment of this application provides a calibration method, applied to an electronic device. The method includes:

obtaining a first aperture size corresponding to a to-be-calibrated aperture setting;
determining, based on a first correspondence, a target position that is of an aperture motor and that corresponds to the first aperture size, where the first correspondence is a relationship between an aperture size and an aperture motor position;
obtaining a to-be-processed image, where the to-be-processed image is an image shot after a rotor of the aperture motor is driven to move to the target position, the to-be-processed image includes a light transmission hole of a variable aperture module, and the aperture motor is configured to change a size of the light transmission hole;
determining a second aperture size of the light transmission hole based on the to-be-processed image;
if the second aperture size does not meet an error requirement, determining a next target position of the aperture motor based on the first correspondence and the second aperture size, and then returning to the steps of obtaining a to-be-processed image and determining a second aperture size of the light transmission hole based on the to-be-processed image; or
if the second aperture size meets the error requirement, determining that the target position is an aperture motor calibration position corresponding to the to-be-calibrated aperture setting; and
obtaining a second correspondence based on an aperture motor calibration position corresponding to each to-be-calibrated aperture setting, where the second correspondence is a relationship between an aperture setting and an aperture motor position.

It can be learned from the foregoing that, for each to-be-calibrated aperture setting, a theoretical aperture opening size, namely, a first aperture size, of the position is first obtained. Then an aperture motor position corresponding to the position is obtained based on a relationship between an aperture size and an aperture motor position. Then an aperture motor is driven to a specified position to change an opening size of a variable aperture, and an actual opening size, namely, a second aperture size, of the variable aperture is calculated by shooting a to-be-processed image. Finally, based on a difference between the actual opening size and the theoretical opening size of the variable aperture, it is determined whether to drive the aperture motor to reach a next target position and calculate an actual opening size of the aperture again, to obtain an aperture motor calibration position of each position. According to this process, aperture motor calibration positions of a plurality of aperture settings may be obtained, and then a relationship between an aperture setting and an aperture motor position is obtained. This implements calibration of the plurality of aperture settings, and implements calibration of a gradient variable aperture.

In some possible implementations of the first aspect, the determining a second aperture size of the light transmission hole based on the to-be-processed image includes:
determining a first pixel area of the light transmission hole in the to-be-processed image; obtaining a first physical area of the light transmission hole based on a conversion coefficient and the first pixel area; and converting the first physical area into the second aperture size.

In this implementation, a physical area is obtained based on a pixel area, and then the physical area is equivalent to a diameter, so that an opening size of the variable aperture can be changed by obtaining an aperture size. In this way, an opening diameter of the variable aperture is slightly affected by a contour shape fluctuation, and accuracy and stability of capturing the opening size of the variable aperture opening are ensured.

In some possible implementations of the first aspect, before the obtaining a first aperture size corresponding to a to-be-calibrated aperture setting, the method further includes:
obtaining a test chart image; determining a second pixel area of a target hole in the test chart image; and determining a ratio of a second physical area of the target hole to the second pixel area as the conversion coefficient.

In some possible implementations of the first aspect, the determining a next target position of the aperture motor based on the first correspondence and the second aperture size includes:
determining a difference between the second aperture size and a third aperture size, where the third aperture size is the first aperture size or a second aperture size corresponding to a previous target position; performing derivation on a relationship curve of the first correspondence, to obtain a target curve; determining a target value corresponding to the target position on the target curve; determining a target ratio of the difference to the target value; and adding the target ratio and the target position, to obtain the next target position.

In this implementation, a next position of the aperture motor is predicted based on the actual opening size and the theoretical opening size of the variable aperture, so that a position of the aperture motor is adjusted when the actual opening size of the aperture does not meet a calibration requirement, to implement calibration of the gradient variable aperture.

In some possible implementations of the first aspect, the error requirement is that an absolute value of a difference between the second aperture size and the first passing aperture is less than or equal to a preset threshold, where when the absolute value of the difference between the second aperture size and the first passing aperture is less than or equal to the preset threshold, the second aperture size meets the error requirement; and when the absolute value of the difference between the second aperture size and the first passing aperture is greater than the preset threshold, the second aperture size does not meet the error requirement.

In some possible implementations of the first aspect, before the obtaining a first aperture size corresponding to a to-be-calibrated aperture setting, the method further includes:
obtaining a set of to-be-measured locations, where the set of to-be-measured locations includes at least one to-be-measured location, and the to-be-measured location is a location selected from a stroke range of the aperture motor; obtaining a target image for each to-be-measured location, and obtaining, based on the target image, an aperture size corresponding to the to-be-measured location, where the target image is an image shot after the rotor of the aperture motor is driven to move to the to-be-measured location, and the target image includes the light transmission hole of the variable aperture module; and obtaining the first correspondence based on each to-be-measured location and the aperture size corresponding to each to-be-measured location.

In some possible implementations of the first aspect, the second correspondence includes an aperture motor calibration position in a first direction and an aperture motor calibration position in a second direction that correspond to each to-be-calibrated aperture setting; and the first direction is a direction from a wide aperture to a narrow aperture, and the second direction is a direction from the narrow aperture to the wide aperture.

In some possible implementations of the first aspect, the to-be-processed image captured each time is the image shot after the rotor of the aperture motor is driven to move from an initial position to the target position. In this implementation, each time an image is shot, the aperture motor is pushed from the initial position to the target position, so that large-step iterative calibration is implemented. In this way, a motor calibration value of the variable aperture is closer to a design value during actual invocation, and accuracy of calibration of a relationship between an aperture opening size and an aperture motor position is ensured.

In some possible implementations of the first aspect, an imaging error relationship of a calibration system of the variable aperture module is as follows: $d_{error} = 2 * d_{pixcelsize} * \beta_{lens}$, where $d_{pixcelsize}$ is a size of a photosensitive element of an image sensor of an imaging camera, $\beta_{lens}$ is a magnification ratio of a lens of the imaging camera, and the imaging camera is configured to capture the to-be-processed image. In this implementation, imaging accuracy of variable aperture opening information is ensured by the imaging error relationship.

According to a second aspect, an embodiment of this application provides a calibration system, including an optical imaging device and a processing device, where

the optical imaging device is configured to: obtain an image shooting instruction delivered by the processing device; capture a to-be-processed image in response to the image shooting instruction; and send the to-be-processed image to the processing device, where the to-be-processed image is an image shot after a rotor of an aperture motor is driven to move to a target position, the to-be-processed image includes a light transmission hole of a variable aperture module, and the aperture motor is configured to change a size of the light transmission hole; and

the processing device is configured to: obtain a first aperture size corresponding to a to-be-calibrated aperture setting; determine, based on a first correspondence, a target position that is of an aperture motor and that corresponds to the first aperture size, where the first correspondence is a relationship between an aperture size and an aperture motor position; obtain a to-be-processed image; determine a second aperture size of the light transmission hole based on the to-be-processed image; if the second aperture size does not meet an error requirement, determine a next target position of the aperture motor based on the first correspondence and the second aperture size, and then return to the steps of obtaining a to-be-processed image and determining a second aperture size of the light transmission hole based on the to-be-processed image; or if the second aperture size meets the error requirement, determine that the target position is an aperture motor calibration position corresponding to the to-be-calibrated aperture setting; and obtain a second correspondence based on an aperture motor calibration position corresponding to each to-be-calibrated aperture setting, where the second correspondence is a relationship between an aperture setting and an aperture motor position.

In some possible implementations of the second aspect, the processing device is specifically configured to: determine a first pixel area of the light transmission hole in the to-be-processed image; obtain a first physical area of the light transmission hole based on a conversion coefficient and the first pixel area; and convert the first physical area into the second aperture size.

In some possible implementations of the second aspect, the optical imaging device is further configured to: capture a test chart image, and send the test table image to the processing device; and

the processing device is further configured to: obtain a test chart image; determine a second pixel area of a target hole in the test chart image; and determine a ratio of a second physical area of the target hole to the second pixel area as the conversion coefficient.

In some possible implementations of the second aspect, the processing device is specifically configured to: determine a difference between the second aperture size and a third aperture size, where the third aperture size is the first aperture size or a second aperture size corresponding to a previous target position; perform derivation on a relationship curve of the first correspondence, to obtain a target curve; determine a target value corresponding to the target position on the target curve; determine a target ratio of the difference to the target value; and add the target ratio and the target position, to obtain the next target position.

In some possible implementations of the second aspect, the error requirement is that an absolute value of a difference between the second aperture size and the first passing aperture is less than or equal to a preset threshold, where when the absolute value of the difference between the second aperture size and the first passing aperture is less than or equal to the preset threshold, the second aperture size meets the error requirement; and when the absolute value of the difference between the second aperture size and the first passing aperture is greater than the preset threshold, the second aperture size does not meet the error requirement.

In some possible implementations of the second aspect, the optical imaging device is further configured to: capture a target image of each to-be-measured location, and send the target image to the processing device; and

the processing device is further configured to: obtain a set of to-be-measured locations, where the set of to-be-measured locations includes at least one to-be-measured location, and the to-be-measured location is a location selected from a stroke range of the aperture motor; obtain a target image for each to-be-measured location, and obtain, based on the target image, an aperture size corresponding to the to-be-measured location, where the target image is an image shot after the rotor of the aperture motor is driven to move to the to-be-measured location, and the target image includes the light transmission hole of the variable aperture module; and obtain the first correspondence based on each to-be-measured location and the aperture size corresponding to each to-be-measured location.

In some possible implementations of the second aspect, the second correspondence includes an aperture motor calibration position in a first direction and an aperture motor calibration position in a second direction that correspond to each to-be-calibrated aperture setting; and

the first direction is a direction from a wide aperture to a narrow aperture, and the second direction is a direction from the narrow aperture to the wide aperture.

In some possible implementations of the second aspect, the to-be-processed image captured each time is the image shot after the rotor of the aperture motor is driven to move from an initial position to the target position.

In some possible implementations of the second aspect, an imaging error relationship of the calibration system is as follows: $d_{error} = 2 * d_{pixelsize} * \beta_{lens}$, where $d_{pixelsize}$ is a size of a photosensitive element of an image sensor of an imaging camera, and $\beta_{lens}$ is a magnification ratio of a lens of the imaging camera.

In some possible implementations of the second aspect, the optical imaging device includes the imaging camera and a light source; and a lens of the imaging camera is a telecentric lens, and the light source is a collimated light source or a low-angle ring surface light source.

According to a third aspect, an embodiment of this application provides a variable aperture module-based photographing method, applied to an electronic device. The method includes:

obtaining a target aperture setting; determining, based on a second correspondence, an aperture motor position corresponding to the target aperture setting, where the second correspondence is a relationship obtained by using the calibration method according to any one of the first aspect, and is used to represent a relationship between an aperture setting and an aperture motor position; and capturing an image after driving a rotor of an aperture motor to move to the aperture motor position, wherein the aperture motor is configured to change a size of a light transmission hole of the variable aperture module.

In some possible implementations of the third aspect, the second correspondence includes an aperture motor calibration position in a first direction and an aperture motor calibration position in a second direction that correspond to each to-be-calibrated aperture setting; and the first direction is a direction from a wide aperture to a narrow aperture, and the second direction is a direction from the narrow aperture to the wide aperture; and

determining, based on the second correspondence, an aperture motor calibration position corresponding to a target aperture size includes:

determining a movement direction of the aperture motor, where the movement direction is the first direction or the second direction; and determining, based on the movement direction and the second correspondence, the aperture motor calibration position corresponding to the target aperture size.

According to a fourth aspect, an embodiment of this application provides an electronic device, including a memory, a processor, and a computer program that is stored in the memory and that is run on the processor. When executing the computer program, the processor implements the method according to any one of the first aspect or the third aspect.

According to a fifth aspect, an embodiment of this application provides a computer-readable storage medium. The computer-readable storage medium stores a computer program. When the computer program is executed by a processor, the method according to any one of the first aspect or the third aspect is implemented.

According to a sixth aspect, an embodiment of this application provides a chip system, where the chip system includes a processor, the processor is coupled to a memory, and the processor executes a computer program stored in the memory, to implement the method according to any one of the first aspect or the third aspect. The chip system may be a single chip or a chip module including a plurality of chips.

According to a seventh aspect, an embodiment of this application provides a computer program product. When the computer program product runs on an electronic device, the electronic device is enabled to perform the method according to the first aspect or the third aspect.

It may be understood that, for beneficial effects of the second aspect to the seventh aspect, refer to related descriptions in the first aspect. Details are not described herein again.

## BRIEF DESCRIPTION OF DRAWINGS

FIG. 1 is a schematic block diagram of a calibration system according to an embodiment of this application;

FIG. 2 is a diagram of an opening size of a variable aperture according to an embodiment of this application;

FIG. 3 is a schematic block diagram of a reflective optical imaging system according to an embodiment of this application;

FIG. 4 is a diagram of an optical path of a conventional lens according to an embodiment of this application;

FIG. 5 is a diagram of an optical path of an object-space telecentric lens according to an embodiment of this application;

FIG. 6 is a schematic block diagram of a transmissive optical imaging system according to an embodiment of this application;

FIG. 7A is a schematic block diagram of an optical imaging system according to an embodiment of this application;

FIG. 7B is a diagram of a test process of an optical imaging system according to an embodiment of this application;

FIG. 7C is a diagram of another test process of an optical imaging system according to an embodiment of this application;

FIG. 8 is a schematic block diagram of a procedure of a process of calibrating a conversion coefficient according to an embodiment of this application;

FIG. 9 is a diagram of a process of calibrating a conversion coefficient according to an embodiment of this application;

FIG. 10 is a schematic block diagram of a procedure of a process of calibrating a first correspondence according to an embodiment of this application;

FIG. 11 is a schematic block diagram of a process of calibrating a first correspondence according to an embodiment of this application;

FIG. 12 is a diagram of a curve for a relationship between a variable aperture motor position and an aperture size according to an embodiment of this application;

FIG. 13 is a schematic block diagram of a procedure of a calibration method according to an embodiment of this application;

FIG. 14 is a diagram of a calibration process according to an embodiment of this application;

FIG. 15 is a schematic block diagram of a hardware structure of an electronic device 1500 according to an embodiment of this application;

FIG. 16 is a schematic block diagram of a software structure of an electronic device 1500 according to an embodiment of this application;

FIG. 17 is a schematic block diagram of a procedure of a variable aperture module-based photographing method according to an embodiment of this application; and

FIG. 18 is a diagram of entering a target aperture setting by a user according to an embodiment of this application.

## DESCRIPTION OF EMBODIMENTS

In the following description, for illustration instead of limitation, specific details such as a specific system structure and technology are provided, so as to thoroughly understand embodiments of this application.

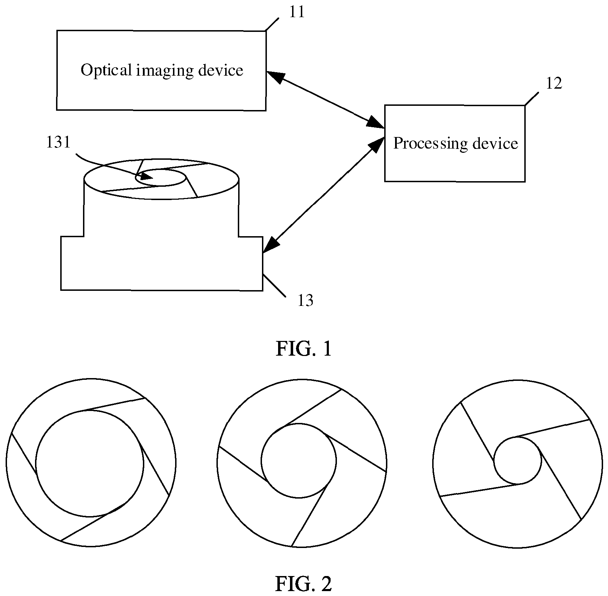

FIG. 1 is a schematic block diagram of a calibration system according to an embodiment of this application. The calibration system may include an optical imaging device 11, a processing device 12, and a to-be-calibrated variable aperture module 13.

The variable aperture module 13 includes but is not limited to a variable aperture (Variable Aperture, VA) motor and a variable aperture. The variable aperture may generate a light transmission hole 131 in a center of a lens. The light transmission hole 131 may be in any shape, for example, a circle and a polygon (for example, a hexagon or an octagon).

The variable aperture motor is configured to adjust a size of the light transmission hole 131, to adjust an amount of light admitted. Generally, a rotor of the variable aperture motor is connected to a movable structure like a light shielding piece or a blade group of the variable aperture. When the rotor of the variable aperture motor moves within a motor stroke range, the light shielding piece or the blade group of the variable aperture also moves accordingly, to change the size of the light transmission hole 131.

For example, FIG. 2 is a diagram of an opening size of a variable aperture. Three different opening sizes of a same variable aperture are separately shown from left to right. In addition, opening sizes of the variable aperture from left to right are sequentially reduced, and sizes of circular light transmission holes are also sequentially reduced.

The optical imaging device 11 is configured to capture an image of the variable aperture module 13, where the image includes information that represents an opening size of the variable aperture. During specific application, the optical imaging device 11 (or referred to as an optical imaging system) may be classified into a reflective optical imaging system and a transmissive optical imaging system based on different imaging manners.

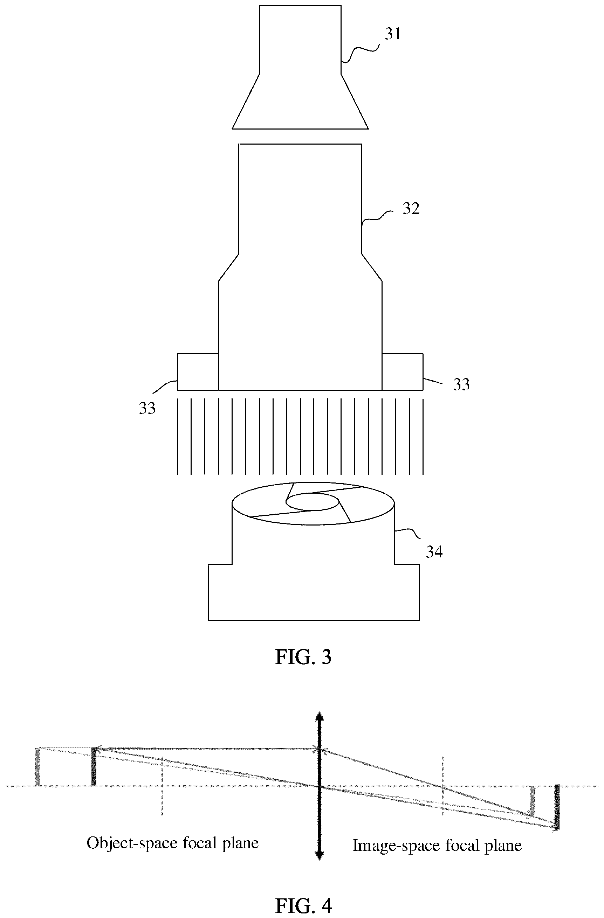

For example, FIG. 3 is a schematic block diagram of a reflective optical imaging system. The system may include an image sensor 31, a lens 32, and a light source 33. The light source 33 is configured to transmit light (as shown by vertical lines in FIG. 3) to a variable aperture module 34, the lens 32 is configured to transmit light reflected by the variable aperture module 34, and the image sensor 31 is configured to convert the light transmitted by the lens 32 into an electrical signal, to capture an image including a light transmission hole of the variable aperture module 34. In other words, after being reflected, the light emitted by the light source 33 is transmitted to the image sensor 31 by the lens 32.

In this embodiment of this application, the light source 33 may be a collimated light source or a low-angle ring surface light source, to improve accuracy of reflected light of a contour of the variable aperture, and further improve imaging accuracy of an image of the variable aperture module. The lens 32 may be a telecentric lens, for example, an object-space telecentric lens or a bi-telecentric lens. Use of the telecentric lens can enable the aperture stop to be on an object-space focal plane, to eliminate a difference in imaging size caused by object-space focus adjustment or a thickness.

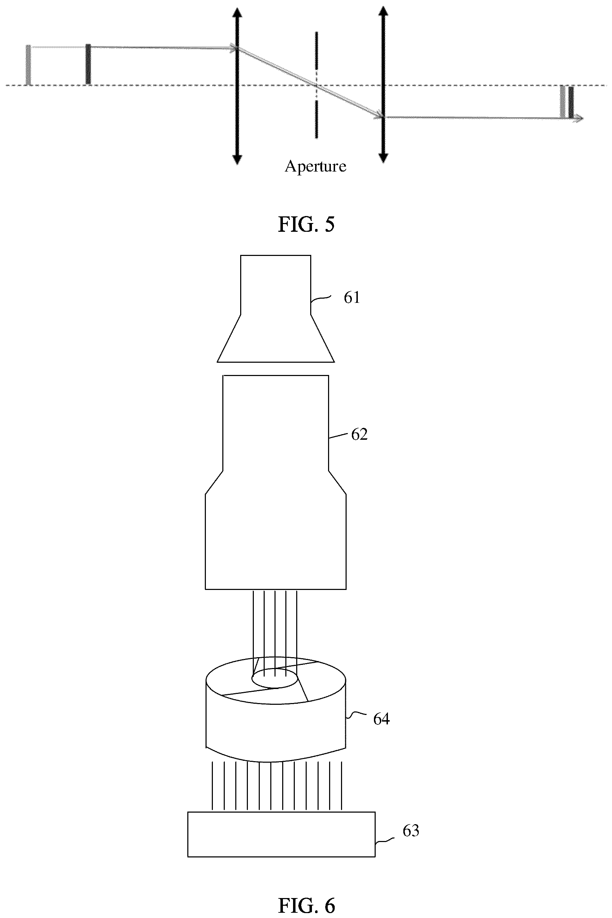

To better describe a difference between a conventional lens and a telecentric lens, the following describes an optical path diagram of a conventional lens shown in FIG. 4 and an optical path diagram of an object-space telecentric lens shown in FIG. 5.

As shown in FIG. 4, two objects of a same size have different distances from a lens, and imaging sizes are also different.

As shown in FIG. 5, although two objects of a same size have different distances from a lens, a difference between final imaging sizes is not large. Therefore, the object-space telecentric lens can eliminate the difference in imaging size caused by object-space focus adjustment or thickness. Specifically, in this embodiment of this application, the telecentric lens can reduce a size deviation caused by a change in a blade thickness and a height of the variable aperture (the blade group), and further improve imaging accuracy of variable aperture opening information.

In this embodiment of this application, to further reduce an imaging error of the variable aperture opening information, an imaging error of the imaging system satisfies the following imaging error relationship: $d_{error} = 2 * d_, * \beta_{lens}$.

Herein, $d_{pixcelsize}$ is a size of a photosensitive element of an image sensor of the imaging system, and $\beta_{lens}$ is a magnification ratio of a lens of the imaging system. $d_{error}$ is an imaging error, for example, $d_{error} \leq 10 \mu m$. In other words, the imaging error is controlled to be within $10 \mu m$.

In other words, in this embodiment of this application, the reflective optical imaging system shown above is used, a collimated light source or a low-angle ring surface light source is used, a telecentric lens is selected as an imaging lens, and a lens magnification ratio and an image sensor parameter are selected together, to reduce an imaging error as much as possible, improve imaging accuracy of the variable aperture opening information as much as possible, and further improve accuracy of subsequently calculating an aperture opening size based on imaging of the variable aperture opening information.

For another example, FIG. 6 is a schematic block diagram of a transmissive optical imaging system. The system may include an image sensor 61, a lens 62, and a light source 63. The light source 63 is configured to transmit light (as shown by vertical lines in FIG. 6) to a variable aperture motor 64 from bottom to top, and the light is transmitted to the lens 62 through a light transmission hole of a variable aperture. The lens 62 is configured to transfer light transmitted through the light transmission hole to the image sensor 61. The image sensor 61 is configured to convert the light transmitted by the lens 62 into an electrical signal, to capture an image including the light transmission hole of the variable aperture. In other words, the light emitted by the light source 63 is transmitted to the image sensor 61 through the lens 62 after being transmitted through the light transmission hole.

In this embodiment of this application, to reduce impact of a divergence angle of a light source on imaging of a contour size, a collimated light source may be selected as the light source 63. A telecentric lens may be selected as the lens 62. In addition, the imaging system meets the imaging error relationship mentioned above.

Similar to the foregoing reflective optical imaging system, in the transmissive optical imaging system, the collimated light source is used, the telecentric lens is selected as an imaging lens, and a suitable image sensor parameter is selected based on a lens magnification ratio, to reduce an imaging error as much as possible, improve imaging accuracy of variable aperture opening information as much as possible, and further improve accuracy of subsequently calculating an aperture opening size based on imaging of the variable aperture opening information.

It can be learned by comparing FIG. 3 and FIG. 6 that, the reflective optical imaging system tests the variable aperture module, and the transmissive optical imaging system tests a variable aperture motor unit. In addition, the reflective optical imaging system and the transmissive optical imaging system are two independent systems. In some other embodiments of this application, another optical imaging system is further provided, to implement functions of two systems: a reflective optical imaging system and a transmissive optical imaging system.

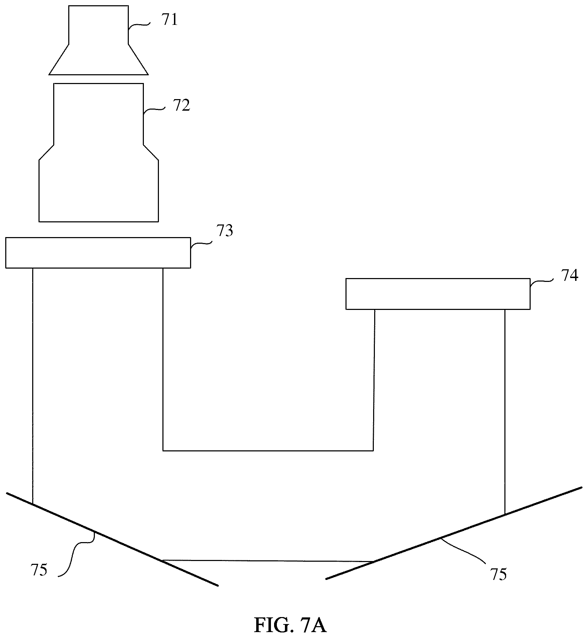

For example, FIG. 7A is a schematic block diagram of an optical imaging system. The system may include an image sensor 71, a lens 72, a reflective light source 73, a transmissive light source 74, and two reflectors 75.

Similar to the foregoing optical imaging system, the reflective light source 73 may be a collimated light source or a low-angle ring surface light source, the transmissive light source may be a collimated light source, the lens 72 may be a telecentric lens, and a magnification ratio of the lens 72 and a size of a photosensitive unit of the image sensor 71 meet an imaging error relationship.

In addition, the optical imaging system may perform three types of font tests on three different optical path parts by using two reflectors 75, without rotating a device.

The system combines functions of a reflective optical imaging system and a transmissive optical imaging system. When the reflective light source 73 is turned on and the transmissive light source 74 is turned off, a function of the reflective optical imaging system may be implemented. When the reflective light source 73 is turned off and the transmissive light source 74 is turned on, a function of the transmissive optical imaging system may be implemented.

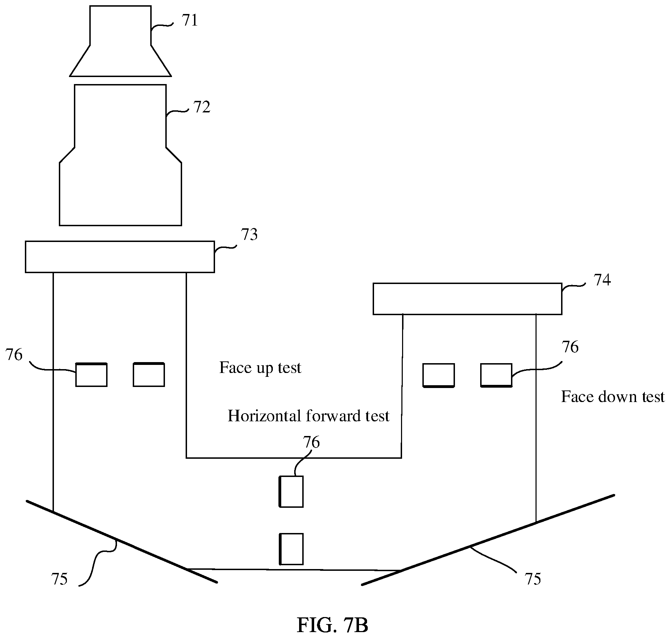

FIG. 7B is a diagram of a test process of an optical imaging system. In this case, the reflective light source 73 of the system is turned off, and the transmissive light source 74 is turned on. Therefore, the system is a transmissive optical imaging system. The transmissive optical imaging system may test a variable aperture motor unit 76. Specifically, after light emitted by the transmissive light source 74 passes through a light transmission hole of the variable aperture motor unit 76, the light is transmitted to the lens 72 through reflection by the reflector 75, and then the lens 72 transmits the light to the image sensor 71.

As shown in FIG. 7B, the imaging system includes three different optical path parts, and a face down test, a horizontal forward test, and a face up test are separately performed on each optical path part, to implement tests of three postures in one system without rotating a device.

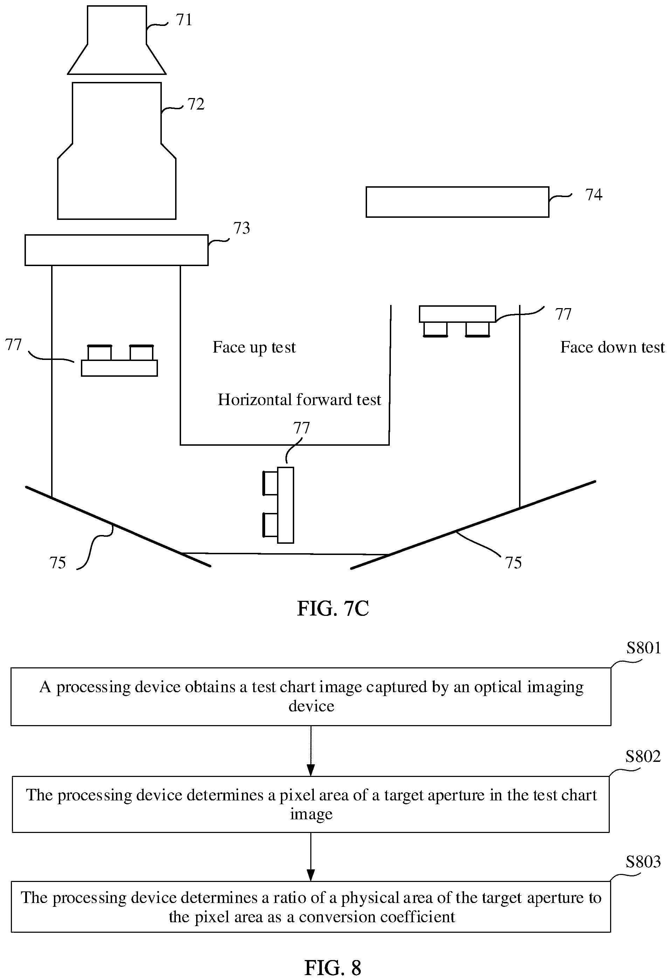

FIG. 7C is a diagram of another test process of an optical imaging system. In this case, a reflective light source 73 of the system is turned on, and a transmissive light source 74 is turned off. Therefore, the system is a transmissive optical imaging system. The reflective optical imaging system may test a variable aperture module 77. Specifically, the reflective light source 73 transmits light to the variable aperture module 77, the light is reflected by the variable aperture module 77 and then transferred to a lens 72, and the lens 72 transfers the light to an image sensor 71.

Similar to FIG. 7B, the imaging system shown in FIG. 7C may alternatively separately perform a facing down test, a horizontal forward test, and a face up test on each optical path part, to implement tests of three postures in one system without rotating a device.

It should be noted that the reflective optical imaging system may test the variable aperture module, or may test an entire system including the variable aperture module. In other words, the variable aperture module in the reflective optical imaging system mentioned above may be replaced with an entire system including the variable aperture module, for example, a mobile phone having a variable aperture module.

After several possible representation forms of the optical imaging device 11 are described as examples, the following describes a working procedure of the processing device 12 and the calibration system.

The processing device 12 is an electronic device having a computing capability, and may be a processor, or may be an electronic device including a processor, for example, a notebook computer. A specific type of the processing device 12 is not limited herein.

The processing device 12 is configured to deliver an aperture motor position instruction to the variable aperture module 13 based on a to-be-calibrated aperture setting, where the aperture motor position instruction instructs the variable aperture module 13 to drive an action of the aperture motor to move to a corresponding position; and is further configured to deliver an image shooting instruction to the optical imaging device 11, where the image shooting instruction instructs the optical imaging device to capture a to-be-processed image including the light transmission hole, and upload the to-be-processed image to the processing device 12.

The processing device 12 is further configured to: process the to-be-processed image, to determine an actual size of the light transmission hole, and determine, based on a difference between the actual size and a theoretical size of the light transmission hole, whether an aperture motor position instruction needs to be delivered, to drive the aperture motor to a next specified position. Each to-be-calibrated aperture setting is calibrated in this process.

It may be understood that the foregoing mentioned calibration system architecture and possible representation manners of the optical imaging device are only examples, and do not constitute a limitation on embodiments of this application.

In a calibration solution provided in embodiments of this application, a conversion coefficient of an optical imaging system is first calibrated, then a first correspondence is calibrated, and finally each to-be-calibrated aperture setting is calibrated based on the conversion coefficient and the first correspondence. The first correspondence is a relationship between an aperture size and an aperture motor position.

It should be noted that the aperture size is an equivalent aperture diameter. The light transmission hole has various shapes, and is not necessarily a circular hole. When the shape of the light transmission hole is a polygon or an irregular pattern, because the light transmission hole is not a circle, an error of directly calculating a diameter of the light transmission hole is large. Therefore, an area of an light transmission part of the aperture is converted into an equivalent aperture diameter.

The following first describes a process of calibrating a conversion coefficient of an optical imaging system.

FIG. 8 is a schematic block diagram of a procedure of a process of calibrating a conversion coefficient according to an embodiment of this application. The process may include the following steps:

Step S801: A processing device obtains a test chart image captured by an optical imaging device.

During specific application, the optical imaging device performs image capture on a standard test (chart) chart, to obtain the test chart image. The standard test table may be a checkerboard chart, a dot chart, or another chart. This is not limited in embodiments of this application.

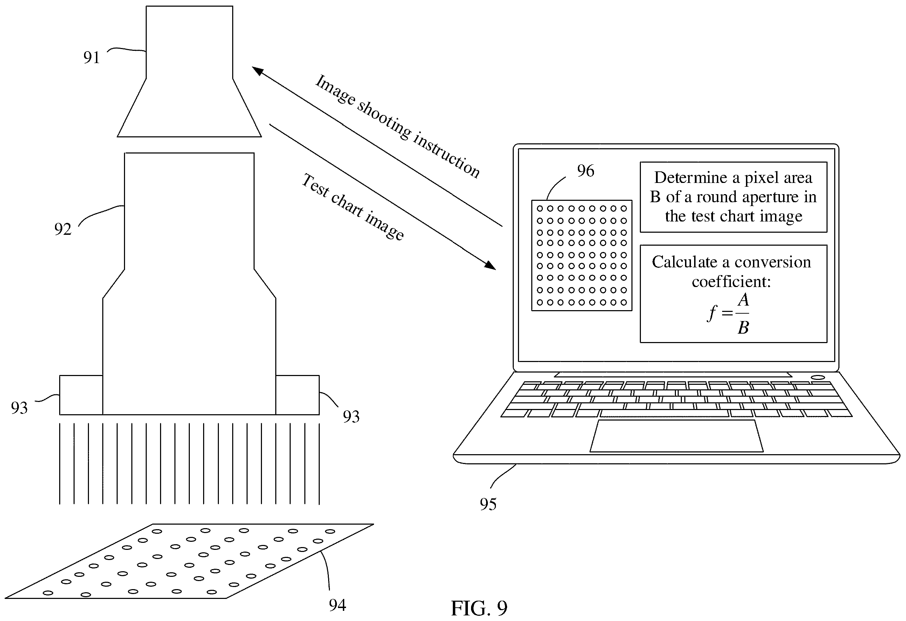

For example, FIG. 9 is a diagram of a process of calibrating a conversion coefficient. The calibration process relates to a reflective optical imaging system, a dot chart plate 94, and a processing device 95. FIG. 9 shows an example in which the processing device 95 is a notebook computer.

The reflective optical imaging system includes an image sensor 91, a lens 92, and a light source 93. For a description of the optical imaging system, refer to the foregoing description. Details are not described herein again. In addition, the reflective optical imaging system in FIG. 9 may alternatively be replaced with another type of optical imaging system.

As shown in FIG. 9, the processing device 95 sends an image shooting instruction to the reflective optical imaging system. After receiving the image shooting instruction, the reflective optical imaging system captures an image on the dot chart plate 94 in response to the image shooting instruction, to obtain a test chart image 96, and sends the test chart image 96 to the processing device 95. A plurality of circular holes are included on the test chart image 96.

Step S802: The processing device determines a pixel area of a target hole in the test chart image.

It may be understood that the test chart image includes one or more holes, and the target hole means one or more specified holes on the test chart image. For example, as shown in FIG. 9, the test chart image 96 includes a plurality of circular holes. In this case, the target hole is one of the plurality of circular holes. The processing device 95 performs image processing on the test chart image 96 to obtain a pixel area B of a circular hole.

Step S803: The processing device determines a ratio of a physical area of the target hole to the pixel area as the conversion coefficient.

The conversion coefficient is a conversion coefficient of the optical imaging system. The conversion coefficient is used to calculate a physical opening size of a variable aperture during subsequent calibration.

The physical area of the target hole may be obtained through measurement or the like. FIG. 9 is used as an example. It is known that a physical area of a circular hole on the dot chart plate 94 is A, and the processing device 95 uses a ratio of the physical area A to the pixel area B as the conversion coefficient $f$ of the reflective optical imaging system. The conversion coefficient is $f = A / B$.

After the process of calibrating the conversion coefficient is described, the following describes a process of calibrating the first correspondence.

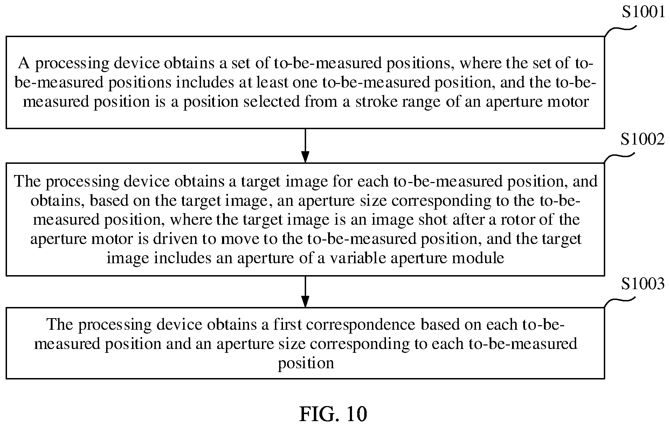

FIG. 10 is a schematic block diagram of a procedure of a process of calibrating a first correspondence according to an embodiment of this application. The process may include the following steps:

Step S1001: A processing device obtains a set of to-be-measured locations, where the set of to-be-measured locations includes at least one to-be-measured location, and the to-be-measured location is a location selected from a stroke range of an aperture motor.

The set of to-be-measured locations includes at least one to-be-measured location. A quantity of locations in the set of to-be-measured locations may be set based on an actual requirement. This is not limited herein.

Within the stroke range of the aperture motor, a plurality of different locations are selected to form the set of to-be-measured locations. The stroke range of the aperture motor is usually calibrated when the motor is delivered from a factory, and describes a nearest movable range and a farthest movable range of the aperture motor. After the stroke range of the aperture motor is calibrated, the stroke range of the aperture motor may be burnt to storage space of the variable aperture module. After the variable aperture module is powered on and works, the stroke range of the aperture motor may be read from the storage space.

Each to-be-measured location in the stroke range of the aperture motor is numbered. In this way, each location corresponds to a position number (namely, a code value), and a corresponding location may be determined by using the code value. Each code value corresponds to an aperture motor position. After the to-be-measured location is selected, a code value of each to-be-measured location may also be obtained.

Generally, the processing device may include a driver chip, and the code value is data delivered by the driver chip.

For example, in this embodiment of this application, the stroke range of the aperture motor is divided into 4096 parts, and each part is assigned a position number. In this case, code values of all locations are respectively 0 to 4095. In addition, in a manner of quickly obtaining points, an aperture motor stroke is selected to be divided into four segments for measurement, and each segment uses a different step. A specific value may be shown in the following table.

**Table 1**

|  | Start point | End point | Step |
|---|---|---|---|
| First segment | 50 | 2530 | 620 |
| Second segment | 2578 | 3538 | 48 |
| Third segment | 3570 | 3858 | 32 |
| Fourth segment | 3906 | 4050 | 48 |

It can be learned from Table 1 that, a code value of the start point of the first segment of stroke is 50, a code value of the end point is 2530, and a step is 620, so that code values of to-be-measured locations included in the first segment of stroke are 50, 670, 1290, 1910, and 2530 separately. There are five to-be-measured locations in total.

Similarly, code values of to-be-measured locations included in a second segment of stroke are separately 2578, 2626, 2674, 2722, 2770, 2818, 2866, 2914, 2962, 3010, 3058, 3106, 3154, 3202, 3250, 3298, 3346, 3394, 3442, 3490, and 3538. There are 21 to-be-measured locations in total.

Code values of the to-be-measured locations included in a third segment of stroke are separately 3570, 3602, 3634, 3666, 3698, 3730, 3762, 3794, 3826, and 3858. There are 10 to-be-measured locations in total.

Code values of to-be-measured locations included in a fourth segment of stroke are separately 3906, 3954, 4002, and 4050. There are four to-be-measured locations in total.

Step S1002: The processing device obtains a target image for each to-be-measured location, and obtains, based on the target image, an aperture size corresponding to the to-be-measured location, where the target image is an image shot after the rotor of the aperture motor is driven to move to the to-be-measured location, and the target image includes the light transmission hole of the variable aperture module.

The target image is an image obtained by performing image capture on the variable aperture module by using the optical imaging device, and the image includes the light transmission hole.

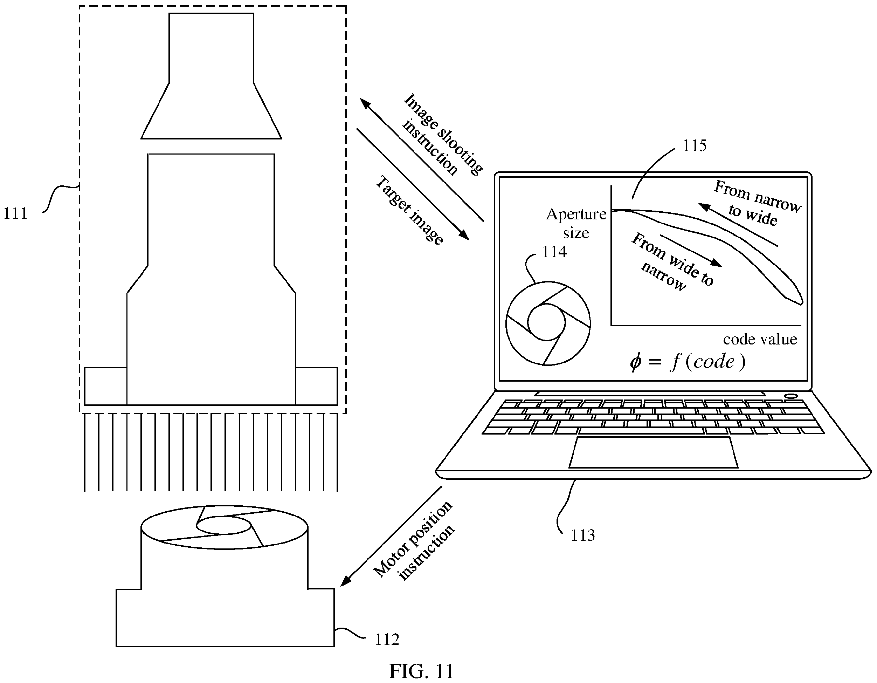

For example, FIG. 11 is a schematic block diagram of a process of calibrating a first correspondence. The process relates to a reflective optical imaging system 111, a variable aperture module 112, and a processing device 113. In this case, the processing device 113 is, for example, a notebook computer. For a related description of the reflective optical imaging system 111, refer to the foregoing description. Details are not described herein again. Certainly, the reflective optical imaging system 111 in FIG. 11 may be replaced with a transmissive optical imaging system or another optical imaging system, and the solution in embodiments of this application can also be implemented. For example, when the reflective optical imaging system 111 is replaced with a transmissive optical imaging system, the variable aperture module 112 may be replaced with an aperture motor.

As shown in FIG. 11, the processing device 113 delivers a motor position instruction to the variable aperture module 112 based on a to-be-measured location, where the motor position instruction instructs the variable aperture module 112 to drive a rotor of an aperture motor to move to the to-be-measured location. In a moving process, the rotor of the aperture motor drives a light shielding piece or a blade of a variable aperture to move, so that a size of a light transmission hole of the variable aperture changes accordingly.

After delivering the motor position instruction to the variable aperture module 112, the processing device 113 delivers an image shooting instruction to the reflective optical imaging system 111. After receiving the image shooting instruction, the reflective optical imaging system 111 captures an image of the variable aperture module 112 in response to the image shooting instruction, to obtain a target image 114, and sends the target image 114 to the processing device 113.

After receiving the target image 114, the processing device 113 processes the target image 114, to calculate an actual size of the light transmission hole of the variable aperture after the rotor of the aperture motor moves to the to-be-measured location.

During specific application, the processing device 113 may first calculate a pixel area of the light transmission hole in the target image 114, then multiply the pixel area by the conversion coefficient, to obtain a physical area of the light transmission hole, and finally convert the physical area of the light transmission hole into an equivalent aperture diameter, to obtain an aperture size corresponding to the to-be-measured position.

The physical area of the light transmission hole is converted into the aperture size by using a formula

$$D = 2 \times \sqrt{\frac{S}{\pi}}$$

. D is the equivalent aperture diameter, namely, the aperture size, and S is the physical area of the aperture size, namely, an area of a light transmission part of the aperture.

It should be noted that, in this embodiment of this application, a manner of converting the area of the light transmission part of the aperture into the equivalent diameter is used, so that a diameter of a variable aperture opening is less affected by a contour shape fluctuation. This improves accuracy of calculating an aperture size.

The foregoing process is performed for each selected to-be-measured location, so that an aperture size corresponding to each to-be-measured location can be obtained.

For example, the first segment of stroke in Table 1 is used as an example. The first segment of stroke includes five to-be-measured locations in total, which are respectively 50, 670, 1290, 1910, and 2530. The processing device 113 first delivers a motor position instruction to the variable aperture module 112, to drive the rotor of the aperture motor to move to a position corresponding to the code value 50, captures, by using the reflective optical imaging system 111, a target image of a to-be-measured location corresponding to the code value 50, and then calculates, based on the target image, an aperture size of the to-be-measured location corresponding to the code value 50.

After completing measurement of the to-be-measured location corresponding to the code value 50, the processing device 113 continues to deliver a motor position instruction to the variable aperture module 112, to drive the rotor of the aperture motor to move to a position corresponding to the code value 670, captures, by using the reflective optical imaging system 111, a target image of a to-be-measured location corresponding to the code value 670, and then calculates, based on the target image, an aperture size of the to-be-measured location corresponding to the code value 670. According to this process, an aperture size of a to-be-measured location corresponding to a code value 1290, an aperture size of a to-be-measured location corresponding to a code value 1910, and an aperture size of a to-be-measured location corresponding to a code value 2530 may be obtained through measurement.

Step S1003: The processing device obtains the first correspondence based on each to-be-measured location and an aperture size corresponding to each to-be-measured location.

It should be noted that the first correspondence may be specifically a relationship curve. The relationship curve is a curve obtained by performing curve fitting on an aperture size corresponding to each to-be-measured location and the to-be-measured location. A curve fitting manner may be polynomial fitting, or may be another fitting manner.

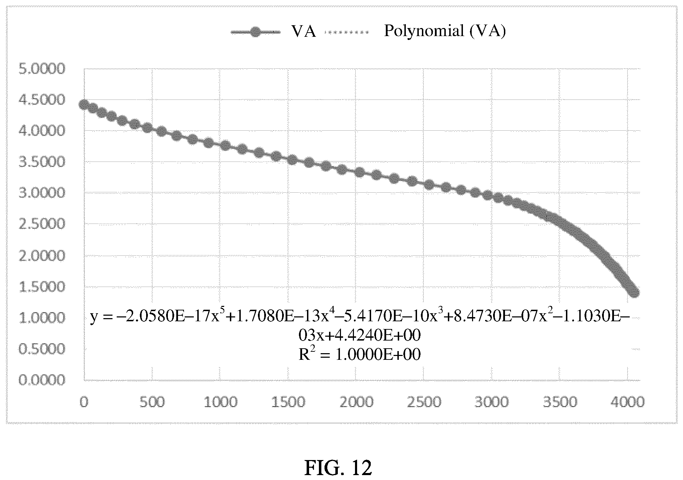

For example, the to-be-measured locations shown in Table 1 are used as an example. After light transmission apertures of all to-be-measured locations in Table 1 are sequentially obtained by using the foregoing process, a relationship curve shown in FIG. 12 is obtained through fitting. As shown in FIG. 12, a horizontal axis represents a code value of an aperture motor position, and a vertical axis represents an aperture size, namely, an aperture opening size. By using the curve shown in FIG. 12, a code value of an aperture motor position corresponding to an aperture size may be found, or an aperture size corresponding to a code value may be found.

It should be noted that in this embodiment of this application, measurement is performed in two directions. A first direction is from a wide aperture to a narrow aperture, and a second direction is from the narrow aperture to the wide aperture. A curve is obtained through fitting in each direction. For example, as shown in a curve diagram 115 in FIG. 11, a direction from a wide aperture to a narrow aperture (that is, from wide to narrow) corresponds to a curve, and a direction from the narrow aperture to the wide aperture (that is, from narrow to wide) corresponds to a curve. The curve shown in FIG. 12 is a curve in one direction.

For example, it is assumed that when a rotor of an aperture motor is at a position corresponding to a code 0, an opening size of a variable aperture is the largest, that is, an aperture is the widest; and when the rotor of the aperture motor is at a position corresponding to a code value 4095, an opening size of the variable aperture is the smallest, that is, the aperture is the narrowest. Therefore, a calibration direction from the code 0 to the code 4095 is the first direction, and a calibration direction from the code 4095 to the code 0 is the second direction.

In this case, in the to-be-measured locations shown in Table 1, the start point is a position corresponding to the code value 50, and the final end point is a position whose code value is 4050. Therefore, when calibration is performed according to Table 1, a calibration direction is the first direction.

Similar to a code value adjustment policy and a to-be-measured location selection policy in the foregoing Table 1, calibration in the second direction is performed by using the following Table 2. As shown in Table 2, a start point is the position corresponding to the code value 4050, a final end point is the position corresponding to the code value 50, and a calibration direction is from the narrow aperture to the wide aperture.

**Table 2**

|  | Start point | End point | Step |
|---|---|---|---|
| First segment | 4050 | 3906 | 48 |
| Second segment | 3858 | 3570 | 32 |
| Third segment | 3538 | 2578 | 48 |
| Fourth segment | 2530 | 50 | 620 |

It may be understood that to-be-measured locations selected in the two directions may be the same or may be different.

After the process of calibrating the conversion coefficient and the process of calibrating the first correspondence are described, the following describes how to calibrate each to-be-calibrated aperture setting based on the first correspondence and the conversion coefficient.

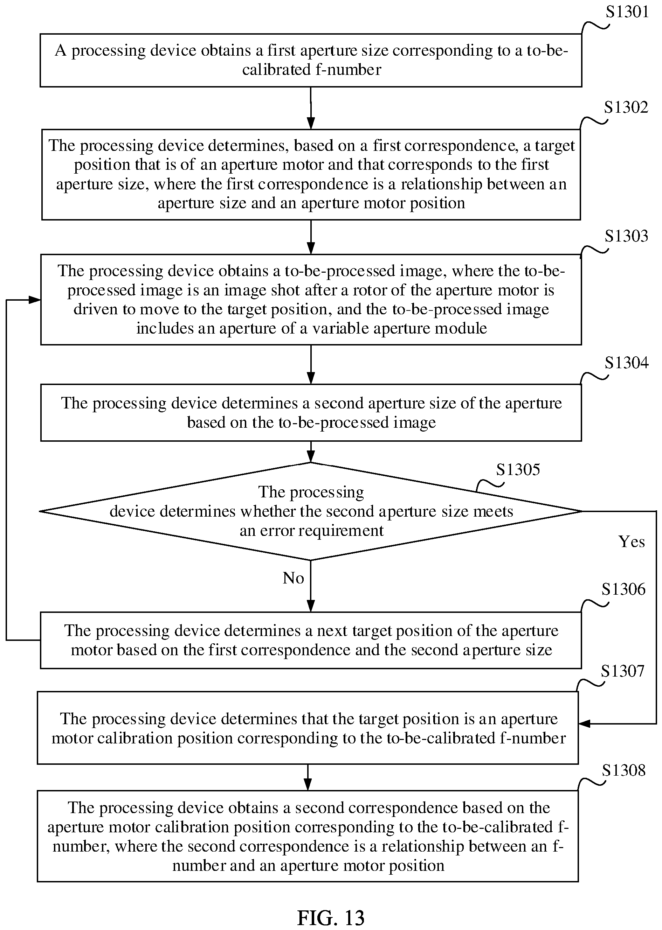

FIG. 13 is a schematic block diagram of a procedure of a calibration method according to an embodiment of this application. The method may include the following steps:

Step S1301: A processing device obtains a first aperture size corresponding to a to-be-calibrated aperture setting.

The to-be-calibrated aperture setting is an aperture setting that needs to be calibrated. The aperture setting is usually expressed in a form of F+number, for example, F1.4 and F2.0. A larger number behind F indicates a smaller aperture and a smaller amount of light admitted.

During specific application, a first aperture size corresponding to each to-be-calibrated aperture setting may be calculated based on a specific conversion relationship. The first aperture size is a theoretical aperture size.

Step S1302: The processing device determines, based on a first correspondence, a target position that is of an aperture motor and that corresponds to the first aperture size, where the first correspondence is a relationship between an aperture size and an aperture motor position.

It should be noted that the first correspondence includes relationship curves in two directions. Therefore, a calibration direction needs to be first determined, and then a target position corresponding to the first aperture size is determined from the corresponding relationship curve based on the calibration direction. The calibration direction includes a first direction and a second direction. The first direction is a direction from a wide aperture to a narrow aperture, and the second direction is a direction from the narrow aperture to the wide aperture.

For example, as shown in a curve diagram 115 in FIG. 11, the first correspondence includes curves in two calibration directions. If the current calibration direction is the first direction, a target position corresponding to the first aperture size is determined based on a curve in a direction from wide to narrow. If the current calibration direction is the second direction, a target position corresponding to the first aperture size is determined based on a curve in a direction from narrow to wide.

Step S1303: The processing device obtains a to-be-processed image, where the to-be-processed image is an image shot after a rotor of the aperture motor is driven to move to the target position, the to-be-processed image includes a light transmission hole of a variable aperture module, and the aperture motor is configured to change a size of the light transmission hole.

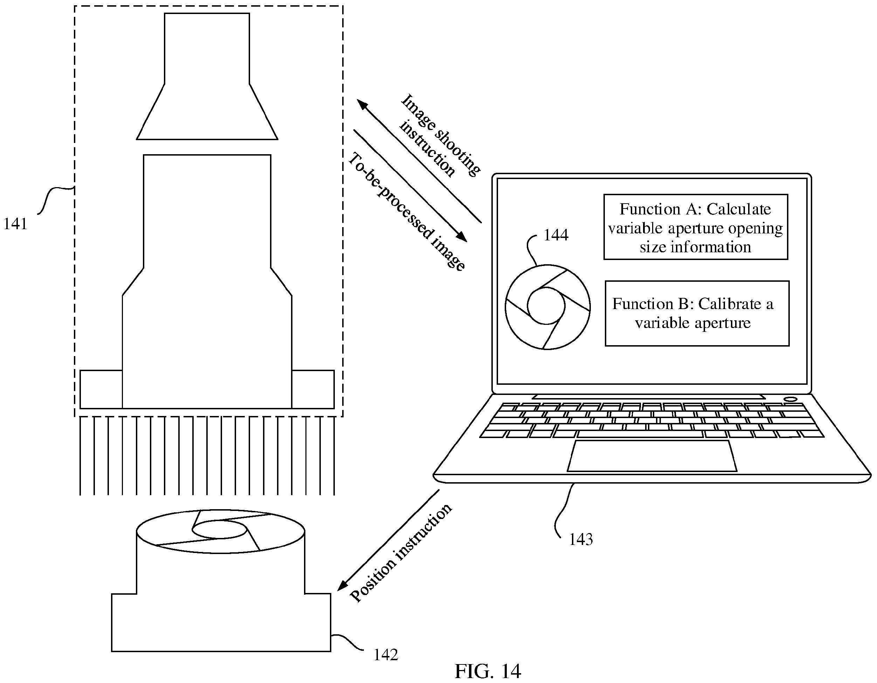

For example, FIG. 14 is a diagram of a calibration process. The calibration process relates to a reflective optical imaging system 141, a variable aperture module 142, and a processing device 143. The processing device 143 first generates a position instruction based on a target position of an aperture motor, and delivers the position instruction to the variable aperture module 142, to drive a rotor of the aperture motor of the variable aperture module 142 to move to the target position.

After delivering the position instruction, the processing device 143 delivers an image shooting instruction to the reflective optical imaging system 141. The reflective optical imaging system 141 captures an image for the variable aperture module 142 in response to the image shooting instruction, to obtain a to-be-processed image 144, and sends the to-be-processed image 144 to the processing device 143.

Step S1304: The processing device determines a second aperture size of the light transmission hole based on the to-be-processed image.

In some embodiments, the processing device may first determine a pixel area of the light transmission hole in the to-be-processed image, then obtain a physical area of the light transmission hole based on a conversion coefficient $f$ and the pixel area of the light transmission hole, and finally convert the physical area into the second aperture size by using a formula $D = 2 \times \sqrt{\dfrac{S}{\pi}}$.

It should be noted that, in this embodiment of this application, an equivalent aperture diameter of the physical area of the light transmission hole serves as a variable aperture opening size, and a center-of-mass position of the light transmission hole serves as a center position of the variable aperture. This is consistent with an actual aperture definition, and impact of a contour shape on accuracy of calculating the variable aperture opening size can be reduced as much as possible.

For example, as shown in FIG. 14, the processing device 143 runs a function A, and the function A is used to calculate variable aperture opening size information. Specifically, after the processing device 143 receives a to-be-processed image 144, a processor of the processing device 143 transfers the to-be-processed image 144 to the function A. The function A first calculates a pixel area of a light transmission hole in the to-be-processed image 144, then calculates an actual physical area of the light transmission hole based on a conversion coefficient and the pixel area, and finally converts the actual physical area of the light transmission hole into an aperture diameter equivalently, to obtain a second aperture size. The second aperture size may represent variable aperture opening size information.

Step S1305: The processing device determines whether the second aperture size meets an error requirement; if the second aperture size does not meet the error requirement, step S1306 is performed; or if the second aperture size meets the error requirement, go to step S1307.

It should be noted that, the error requirement is that an absolute value of a difference between the second aperture size and the first passing aperture is less than or equal to a preset threshold, that is $|\phi_{N0} - \phi_N| \le \phi_M$, where $\phi_N$ is the first aperture size, $\phi_{N0}$ is the second aperture size, and $\phi_M$ is the preset threshold. When the absolute value of the difference between the second aperture size and the first passing aperture is less than or equal to the preset threshold, it is determined that the second aperture size meets the error requirement. When the absolute value of the difference between the second aperture size and the first passing aperture is greater than the preset threshold, it is determined that the second aperture size does not meet the error requirement.

The error requirement is set based on an acceptable error size of a variable aperture system.

Step S1306: The processing device determines a next target position of the aperture motor based on the first correspondence and the second aperture size. Then, step S1303 is performed. That is, the processing device delivers the determined next target position to the aperture motor, to drive the rotor of the aperture motor to move to the next target position, and capture a to-be-processed image when the rotor of the aperture motor is at the target position.

In some embodiments, the next target position of the aperture motor may be determined according to a formula

$$code_{n+1} = \frac{\phi_n - \phi_{n-1}}{f'(code_n)} + code_n$$

, where $n$ is a positive integer greater than or equal to 1, $code_n$ is the current target position, $code_{n+1}$ is the next target position, and $\phi_n$ is an aperture size calculated based on a to-be-processed image corresponding to $code_n$. When $n > 1$, $\phi_{n-1}$ is an aperture size calculated based on a to-be-processed image corresponding to a previous target position. When $n = 1$, $\phi_0$ is a theoretical aperture size corresponding to the to-be-calibrated aperture setting, namely, the first aperture size.

To better describe the foregoing process, the following sequentially describes examples of different values of $n$.

$$code_2 = \frac{\phi_1 - \phi_0}{f'(code_1)} + code_1$$

When $n = 1$, . In this case, $\phi_0$ is a theoretical aperture size corresponding to the to-be-calibrated aperture setting, namely, the first aperture size; and $code_1$ is a target position corresponding to the first aperture size. $\phi_1$ is the second aperture size corresponding to $code_1$, that is, after the rotor of the aperture motor moves to a position corresponding to $code_1$, an optical imaging device captures an image of the variable aperture module, to obtain the to-be-processed image, and a second aperture size calculated based on the to-be-processed image in this case is the second aperture size $\phi_1$ corresponding to $code_1$.

It may be understood that when the second aperture size $\phi_1$ does not meet the error requirement, that is, an absolute value of $\phi_1 - \phi_0$ is greater than the preset threshold, a next target position $code_2$ of the aperture motor is predicted.

After the next target position $code_2$ is obtained, steps of obtaining a to-be-processed image, determining a second aperture size of the light transmission hole based on the to-be-processed image, and determining whether the second aperture size meets the error requirement are performed. In other words, after the rotor of the aperture motor is driven to move to a position corresponding to $code_2$, the optical imaging device captures an image of the variable aperture module, to obtain a to-be-processed image corresponding to $code_2$. After the to-be-processed image corresponding to $code_2$ is obtained, the second aperture size $\phi_2$ corresponding to $code_2$ is calculated based on the to-be-processed image corresponding to $code_2$, and whether the second aperture size $\phi_2$ meets the error requirement is determined.

If an absolute value of $\phi_2 - \phi_0$ is greater than the preset threshold, it is determined that the second aperture size $\phi_2$ does not meet the error requirement, and a next target position $code_3$ needs to be further predicted. If the absolute value of $\phi_2 - \phi_0$ is less than or equal to the preset threshold, it is determined that the second aperture size $\phi_2$ meets the error requirement, and the target position $code_2$ is determined as an aperture motor calibration position corresponding to the to-be-calibrated aperture setting.

$$code_3 = \frac{\phi_2 - \phi_1}{f'(code_2)} + code_2$$

When a next target position $code_3$ is predicted, $n = 2$, and .

After the next target position $code_3$ is obtained, steps of obtaining a to-be-processed image, determining a second aperture size of the light transmission hole based on the to-be-processed image, and determining whether the second aperture size meets the error requirement are performed. In other words, after the rotor of the aperture motor is driven to move to a position corresponding to $code_3$, the optical imaging device captures an image of the variable aperture module, to obtain a to-be-processed image corresponding to $code_3$. After the to-be-processed image corresponding to $code_3$ is obtained, the second aperture size $\phi_3$ corresponding to $code_3$ is calculated based on the to-be-processed image corresponding to $code_3$, and whether the second aperture size $\phi_3$ meets the error requirement is determined.

If an absolute value of $\phi_3 - \phi_0$ is greater than the preset threshold, it is determined that the second aperture size $\phi_3$ does not meet the error requirement, and a next target position $code_4$ needs to be further predicted. If the absolute value of $\phi_3 - \phi_0$ is less than or equal to the preset threshold, it is determined that the second aperture size $\phi_3$ meets the error requirement, and the target position $code_3$ is determined as an aperture motor calibration position corresponding to the to-be-calibrated aperture setting.

$$code_4 = \frac{\phi_3 - \phi_2}{f'(code_3)} + code_3$$

When a next target position $code_4$ is predicted, $n = 3$, and .

By analogy, when the absolute value of $\phi_n - \phi_0$ is less than or equal to the preset threshold, it is determined that the second aperture size $\phi_n$ meets the error requirement, and the target position $code_n$ is determined as an aperture motor calibration position corresponding to the to-be-calibrated aperture setting.

In some embodiments, the to-be-processed image captured each time is the image shot after the rotor of the aperture motor is driven to move from an initial position to the target position. In other words, each time after it is determined that the second aperture size does not meet the error requirement and a next target position of the aperture motor is determined, the rotor of the aperture motor is first pushed back to the initial position, and then pushed from the initial position to the next target position.

For example, it is assumed that a code value of the initial position is a code 0, the processing device first determines a theoretical aperture size, namely, a first aperture size, of a to-be-calibrated aperture setting, determines, based on the first correspondence, a target position *code,* corresponding to the first aperture size, and then drives the rotor of the aperture motor to move from the initial position, namely, the code 0, to the target position $code_1$.

If a second aperture size $\phi_1$ corresponding to *code,* does not meet the error requirement, a next target position $code_2$ of the aperture motor is determined. In this case, the actuator of the aperture motor is first pushed back from the target position *code,* to the code 0, and then pushed from the code 0 to the target position $code_2$, instead of directly pushed from the target position *code,* to the target position $code_2$.

In contrast, the rotor of the aperture motor is pushed from the initial position to a target position each time. A push step is large, and this is large-step iterative calibration. The rotor of the aperture motor is directly pushed from one target position to a next target position. A push step is small, and this is small-step iterative calibration. During actual application, an aperture motor calibration position obtained through large-step iterative calibration is closer to a designed value. In other words, compared with the small-step iterative calibration, the large-step iterative calibration can more accurately calibrate a relationship between an aperture setting and an aperture motor position.

In addition, in an actual application phase, the rotor of the aperture motor is usually pushed from the initial position to the target position. Therefore, a large-step iterative calibration manner is more practical.

Certainly, in some other embodiments, a small-step iterative calibration manner may alternatively be used. In this case, each time the to-be-processed image is captured, the rotor of the aperture motor does not need to be first pushed back to the initial position, but is directly pushed from the current target position to a next target position.

It should be further noted that the calibration direction in this embodiment of this application may include the first direction and the second direction. The large-step iterative calibration manner may be used in each direction. The first direction is the direction from the wide aperture to the narrow aperture, and the second direction is the direction from the narrow aperture to the wide aperture. Certainly, there may alternatively be only one calibration direction.

For example, it is assumed that when a rotor of an aperture motor is at a position corresponding to a code 0, an opening size of a variable aperture is the largest, that is, an aperture is the widest; and when the rotor of the aperture motor is at a position corresponding to a code value 4095, an opening size of the variable aperture is the smallest, that is, the aperture is the narrowest. Therefore, a calibration direction from the code 0 to the code 4095 is the first direction, and a calibration direction from the code 4095 to the code 0 is the second direction.

Step S1307: The processing device determines that the target position is an aperture motor calibration position corresponding to the to-be-calibrated aperture setting.

During specific application, for each to-be-calibrated aperture setting, the foregoing step S1301 to step S1307 are performed, to obtain an aperture motor calibration position corresponding to each to-be-calibrated aperture setting.

Step S1308: The processing device obtains a second correspondence based on the aperture motor calibration position corresponding to the to-be-calibrated aperture setting, where the second correspondence is a relationship between an aperture setting and an aperture motor position.

It should be noted that, when the calibration direction includes the first direction and the second direction, the second correspondence includes an aperture motor calibration position in the first direction and an aperture motor calibration position in the second direction that correspond to each to-be-calibrated aperture setting. In other words, one aperture setting corresponds to two aperture motor calibration positions. The first direction is the direction from the wide aperture to the narrow aperture, and the second direction is the direction from the narrow aperture to the wide aperture. For example, if a code is 0, an aperture opening size is the largest, that is, the aperture is the widest; if a code is 4095, an aperture opening size is the smallest, that is, the aperture is the narrowest. In this case, a calibration direction from the code 0 to the code 4095 is the first direction, and a calibration direction from the code 4095 to the code 0 is the second direction.

For example, based on the scenario in FIG. 14, calibration of an aperture setting F1.4 is used as an example, and an aperture opening size corresponding to the aperture setting F1.4, namely, a first aperture size, is 4.42 mm. 4.42 mm is substituted into the curve shown in FIG. 12, and it may be obtained that a target position corresponding to 4.42 mm is a position whose code value is 50.

In addition, it is assumed that a calibration direction from the code 0 to the code 4095 is the first direction, and a calibration direction from the code 4095 to the code 0 is the second direction. In this case, the initial position is the code 0, and the calibration direction is the first direction.

After determining, by using a function B, that the target position is the position whose code value is 50, the processing device 143 generates a position instruction, and delivers the position instruction to the variable aperture module 142 by using the function B, to drive the rotor of the aperture motor to move from a position whose code value is 0 to the position whose code is 50. Then, the processing device 143 delivers an image shooting instruction to the reflective optical imaging system 141 by using the function B, to capture a to-be-processed image by using the reflective optical imaging system 141.

After obtaining the to-be-processed image, the processing device 143 calculates, based on the to-be-processed image and the function A, that a second aperture size is 4.3 mm. Then, the processing device 143 determines, by using the function B, whether the second aperture size meets the error requirement. In this case, the preset threshold is 0.01 mm.

Because 4.42-4.30=0.12 mm, and 0.12 mm is greater than 0.01 mm, that is, the absolute value of the difference between the second aperture size and the first aperture size is greater than the preset threshold, it is determined that the second aperture size does not meet the error requirement, and a next target position needs to be further predicted.

The processing device 143 calculates a next target position $code_2$ by using the function B, and

$$code_2 = 50 + \frac{4.42 - 4.3}{f'(50)} = 47$$

. Herein, $f(50)$ may be obtained by using the curve in FIG. 12.

After determining that the next target position $code_2$ is 47, the processing device 143 delivers a position instruction to the variable aperture module 142 by using the function B, to drive the rotor of the aperture motor to move from the position whose code value is 0 to a position whose code value is 47. In this case, because the large step iterative calibration manner is used, the rotor of the aperture motor first moves from the position whose code value is 50 to the position whose code value is 0, and then moves from the position whose code value is 0 to the position whose code value is 47.

After delivering the position instruction by using the function B, the processing device 143 further delivers an image shooting instruction by using the function B, to obtain a to-be-processed image in which the rotor of the aperture motor is located when the code value is 47. Then, aperture opening size information is calculated again by using the function B. In this case, a second passing aperture that corresponds to the code value 47 and that is calculated by the processing device 143 is 4.43 mm.

Then, the processing device 143 determines, by using the function B, whether the second aperture size meets the error requirement. In this case, 4.43-4.42=0.01 mm, and 0.01 mm is equal to 0.01 mm. That is, the absolute value of the difference between the second aperture size and the first aperture size is less than or equal to the preset threshold. In this case, it is determined that the second aperture size meets the error requirement, and a position whose code is 47 serves as an aperture motor calibration position of the aperture setting F1.4 when the calibration direction is in the first direction.

According to the foregoing process, calibration in the first direction and the second direction is separately performed on F1.4, F2.0, F2.8, and F4.0, to obtain a calibration code table. The calibration code table may be shown in Table 3.

**Table 3**

|  | Code in a first direction (from wide to narrow) | Code in a second direction (from narrow to wide) |
|---|---|---|
| F1.4 | 47 | 55 |
| F2.0 | 2400 | 2430 |
| F2.8 | 3490 | 3510 |
| F4.0 | 3960 | 4050 |

It should be noted that, in addition to a calibration code table similar to Table 3, the second correspondence may be represented in another form, for example, may be a relationship curve. In addition, the to-be-calibrated aperture setting is not limited to aperture settings mentioned in Table 3.

After the second correspondence is obtained by using the foregoing calibration process, the second correspondence may be burnt to the variable aperture module and/or the aperture motor.

It can be learned from the foregoing that, in this embodiment of this application, a gradient variable aperture is calibrated. In addition, in the calibration solution provided in this embodiment of this application, an area of a light transmission part of the aperture is equivalent to an aperture diameter, so that the variable aperture opening diameter is less affected by a contour shape, and accuracy of calculating a variable aperture opening size is improved. In addition, the large step iterative calibration manner in two directions is used, so that accuracy of calibration of a correspondence between an aperture motor position and an aperture setting is improved. Further, hardware of the optical imaging system is properly selected, and an imaging error of the optical imaging system meets the foregoing imaging error relationship, so that imaging of variable aperture opening size information is more accurate, and accuracy of subsequently calculating a variable aperture opening size based on the imaging of the variable aperture opening information is further improved.

After the calibration process is described, the following describes an application process by using an example.

The following first describes an example of an electronic device that may be involved in an application phase.

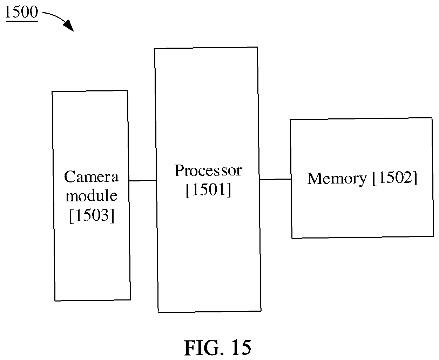

FIG. 15 is a schematic block diagram of a hardware structure of an electronic device 1500 according to an embodiment of this application. As shown in FIG. 15, an electronic device 1500 may include a processor 1501, a memory 1502, and a camera module 1503. The camera module 1503 may include but is not limited to an image sensor, a variable aperture, an aperture motor, a camera, and the like.

The electronic device 1500 may include one or N cameras, where N is a positive integer greater than 1.

It may be understood that the structure shown in this embodiment of this application does not constitute a specific limitation on the electronic device 1500. In some other embodiments of this application, the electronic device 1500 may include more or fewer components than those shown in the figure, or some components may be combined, or some components may be split, or there may be a different component layout. The components shown in the figure may be implemented by using hardware, software, or a combination of software and hardware.

For example, when the electronic device 1500 is a mobile phone or a tablet computer, the electronic device 1500 may further include a touchscreen including a display and a touch sensor.

The processor 1501 may include one or more processing units. For example, the processor 1501 may include an application processor (application processor, AP), a graphics processing unit (graphics processing unit, GPU), an image signal processor (image signal processor, ISP), a controller, a memory, a video codec, and/or a digital signal processor (digital signal processor, DSP). Different processing units may be independent components, or may be integrated into one or more processors.

The controller may be a nerve center and a command center of the electronic device 1500. The controller may generate an operation control signal based on an instruction operation code and a time sequence signal, to complete control of instruction reading and instruction execution.

In some embodiments, the processor 1501 may include one or more interfaces. The interface may include a mobile industry processor interface (mobile industry processor interface, MIPI) and/or a general-purpose input/output (general-purpose input/output, GPIO) interface, and the like.

The MIPI interface may be configured to connect the processor 1501 to a peripheral component like a display or a camera. The MIPI interface includes a camera serial interface (camera serial interface, CSI), a display serial interface (display serial interface, DSI), and the like. In some embodiments, the processor 1501 communicates with the camera through the CSI, to implement a photographing function of the electronic device 1500. The processor 1501 communicates with the display through the DSI, to implement a display function of the electronic device 1500.

The GPIO interface may be configured by software. The GPIO interface may be configured as a control signal or a data signal. In some embodiments, the GPIO interface may be configured to connect the processor 1501 to a camera, a display, or the like. The GPIO interface may alternatively be configured as an MIPI interface, or the like.

It may be understood that an interface connection relationship between the modules illustrated in this embodiment of this application is merely used as an example for description, and does not constitute a limitation on the structure of the electronic device 1500. In some other embodiments of this application, the electronic device 1500 may alternatively use an interface connection manner different from that in the foregoing embodiment, or use a combination of a plurality of interface connection manners.

The electronic device 1500 may implement a photographing function through the ISP, the camera, the video codec, the GPU, the display, the application processor, and the like.

The ISP is configured to process data fed back by the camera. For example, during photographing, a shutter is pressed, and light is transmitted to an image sensor through a lens. An optical signal is converted into an electrical signal, and a photosensitive element of the image sensor transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 1.

The camera is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV.

A variable aperture is configured to control an amount of light admitted to the lens. The variable aperture generates a light transmission hole in a center of the lens. A larger opening of the variable aperture indicates a larger aperture size of the light transmission hole, and a larger amount of light admitted to the lens.

An aperture motor is configured to change an aperture opening size. Specifically, a rotor of the aperture motor is connected to the variable aperture. When the rotor of the aperture motor moves within a stroke range, a light shielding piece or a blade group of the variable aperture also moves accordingly, so that the aperture size of the light transmission hole changes, and an amount of light admitted to the lens changes.

The digital signal processor is configured to process a digital signal, and may process another digital signal in addition to the digital image signal.

The memory 1502 may be configured to store computer-executable program code. The executable program code includes instructions. The processor 101 runs the instructions stored in the internal memory, to perform various function applications of the electronic device 1500 and data processing. The memory 1502 may include a program storage area and a data storage area. The program storage area may store an operating system, an application required by at least one function (for example, a sound playing function or an image playing function), and the like. The data storage area may store data (such as audio data and an address book) created during use of the electronic device 1500, and the like. In addition, the internal memory may include a high-speed random access memory, or may include a nonvolatile memory such as at least one magnetic disk storage device, a flash memory, or a universal flash storage (universal flash storage, UFS).

In this embodiment of this application, the camera module 1503 may include a one time programmable (One Time Programmable, OTP) memory, configured to store information such as a stroke range of an aperture motor and/or a pre-calibrated correspondence between an aperture motor position and an aperture setting. Specifically, the information may be burnt to the camera module by using an OTP technology.

After the hardware architecture of the electronic device 1500 is described, the following describes a software architecture of the electronic device 1500 by using an example.

A software system of the electronic device 1500 may use a layered architecture, an event-driven architecture, a microkernel architecture, a micro service architecture, or a cloud architecture. In an embodiment of this application, an Android system of a layered architecture is used as an example to describe a software structure of the electronic device 1500.

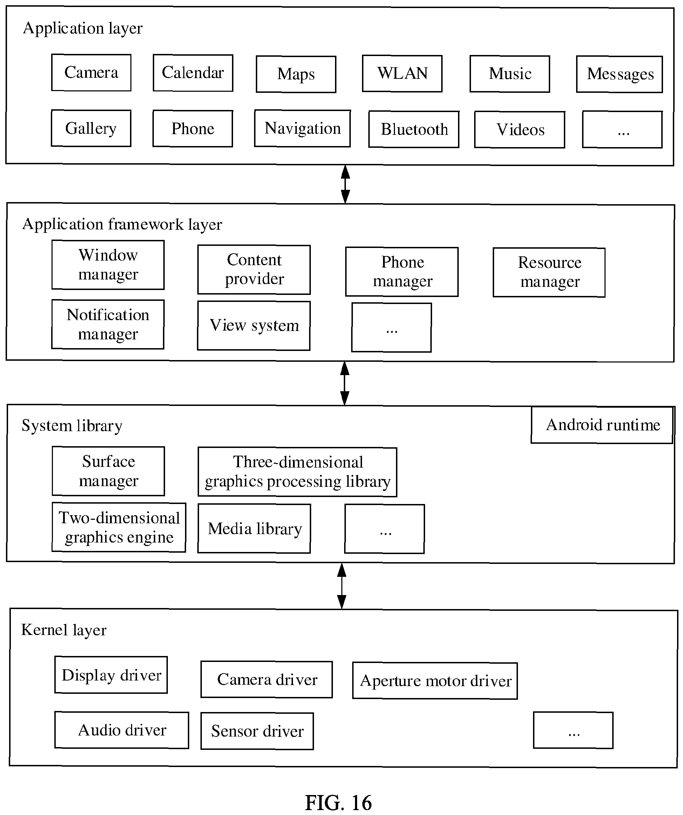

FIG. 16 is a schematic block diagram of a software structure of an electronic device 1500 according to an embodiment of this application.

In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 16, the application program packages may include application programs such as camera, gallery, calendar, phone, maps, navigation, WLAN, Bluetooth, music, videos, and SMS messages.

The application framework layer provides an application programming interface (application programming interface, API) and a programming framework for an application at the application layer. The application framework layer includes some predefined functions.

As shown in FIG. 16, the application program framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like. The content provider is configured to: store and obtain data, and enable the data to be accessed by an application program. The data may include a video, an image, audio, and the like.

The view system includes visual controls such as a control for displaying a text and a control for displaying an image. The view system may be configured to construct an application program. A display interface may include one or more views. For example, a display interface including an SMS message notification icon may include a text display view and an image display view.

The phone manager is configured to provide a communication function for the electronic device 1500, for example, management of a call status (including answering, declining, or the like). The resource manager provides various resources such as a localized character string, an icon, an image, a layout file, and a video file for an application program. The notification manager enables an application program to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an announcement is given, the electronic device vibrates, or the indicator light blinks.

The Android runtime (Android runtime) includes a kernel library and a virtual machine. The Android runtime is responsible for scheduling and management of the Android system.

The kernel library includes two parts: a function that needs to be called in Java language and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video coding formats, for example, MPEG4, H.264, MP3, AAC, AMR, JPG, and PNG.

The three-dimensional graphics processing library is configured to implement three-dimensional graphics drawing, image rendering, composition, layer processing, and the like. The 2D graphics engine is a drawing engine for 2D drawing. The kernel layer is a layer between hardware and software. The kernel layer includes at least a display driver, a camera driver, an audio driver, a sensor driver, and an aperture motor driver.

In this embodiment of this application, after receiving a position value of an aperture motor delivered by an upper layer, the kernel layer drives, by using the aperture motor, the aperture motor to move to a corresponding position, and returns a current position of the aperture motor to the upper layer.

It should be noted that a processing device in a calibration stage and an electronic device in an application stage may be a same device. For example, both the processing device in the calibration stage and the electronic device in the application stage are an entire system, for example, a mobile phone, including a variable aperture module. In this case, the calibration phase may be performed in an assembly line. For example, when both the processing device and the electronic device are mobile phones, a correspondence between an aperture setting and an aperture motor position is calibrated in a mobile phone production line, and the correspondence obtained through calibration is burnt to a camera module of the mobile phone. Certainly, the calibration phase may alternatively be performed in a production line of a variable aperture module or a camera module including a variable aperture. In this case, the processing device is an external test device, and the electronic device is an entire system including a variable aperture module.

After the electronic device 1500 in embodiments of this application is described, the following describes in detail an application phase of embodiments of this application.

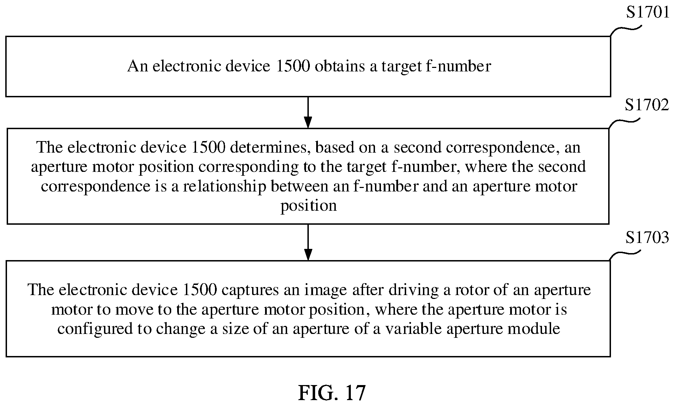

FIG. 17 is a schematic block diagram of a procedure of a variable aperture module-based photographing method according to an embodiment of this application. The process may include the following steps:

Step S1701: An electronic device 1500 obtains a target aperture setting.

It should be noted that the target aperture setting is a required aperture setting. For example, if a user wants to adjust an aperture setting to F1.4, an amplification rate entered to the electronic device 1600 through a touch operation is F1.4.

The target aperture setting may be entered by a user, or may be determined by an application program. A manner of obtaining the target aperture setting is not limited herein.

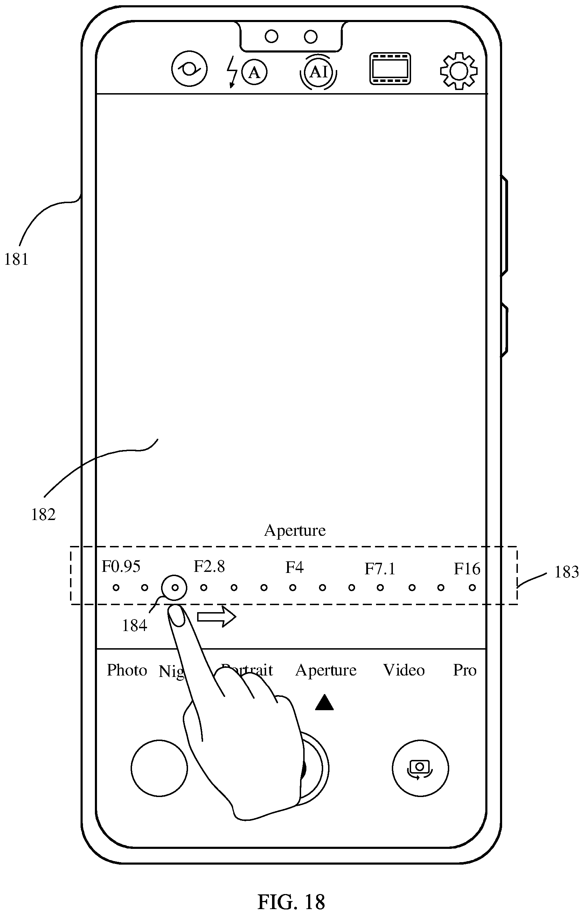

FIG. 18 is a diagram of entering a target aperture setting by a user. As shown in FIG. 18, a camera interface of a mobile phone 181 includes a viewfinder frame 182, and the viewfinder frame 182 includes an adjustment bar 183 used to adjust an aperture setting. A user may drag a control 184 on the adjustment bar 183 leftwards or rightwards to adjust the aperture setting. An aperture at a leftmost aperture setting of the adjustment bar 183 is the widest, and an aperture at a rightmost aperture setting is the narrowest. If the user wants to increase the aperture, the user slides the control 184 leftwards. If the user wants to decrease the aperture, the user slides the control 184 rightwards.

The mobile phone 181 obtains, in response to a touch operation entered by the user at the adjustment bar 183, a target aperture setting specified by the user.

Step S1702: The electronic device 1500 determines, based on a second correspondence, an aperture motor position corresponding to the target aperture setting, where the second correspondence is a relationship between an aperture setting and an aperture motor position.

It can be learned from the foregoing that the second correspondence includes an aperture motor calibration position in a first direction and an aperture motor calibration position in a second direction that correspond to each to-be-calibrated aperture setting. Therefore, when the aperture motor position is determined based on the second corresponding aperture, whether a movement direction of an aperture motor is a first direction or a second direction needs to be first determined. If the movement direction of the aperture motor is the first direction, an aperture motor calibration position in the first direction is selected. If the movement direction of the aperture motor is the second direction, an aperture motor calibration position in the second direction is selected.

The movement direction of the aperture motor may be obtained based on a current aperture setting and a target aperture setting. If an aperture of the current aperture setting is narrower than an aperture of the target aperture setting, it is determined that the aperture changes from a wide aperture to a narrow aperture. Therefore, the movement direction of the aperture motor is the first direction. If the aperture of the current aperture setting is wider than the aperture of the target aperture setting, it is determined that the aperture change direction is from the narrow aperture to the wide aperture. Therefore, the movement direction of the aperture motor is the second direction.

For example, the calibration code table shown in Table 3 is used as an example. If the current aperture setting is F1.4, and a target aperture setting is F2.0, the aperture setting needs to be switched from F1.4 to F2.0. Because an aperture of F1.4 is wider than an aperture of F2.0, an aperture changes from a wide aperture to a narrow aperture. Therefore, a code in the first direction is selected as an aperture motor position of the target aperture setting. In other words, an aperture motor position corresponding to F2.0 is a position corresponding to a code value 2400.

If the current aperture setting is F2.0 and the target aperture setting is F1.4, the aperture setting needs to be switched from F2.0 to F1.4. Because an aperture of F1.4 is wider than an aperture of F2.0, an aperture direction is from a narrow aperture to a wide aperture. Therefore, a code in the second direction is selected as an aperture motor position of the target aperture setting. In other words, an aperture motor position corresponding to F1.4 is a position corresponding to a code value 55.

Certainly, if calibration is performed in only one direction in the foregoing calibration process, in the second correspondence, each aperture setting corresponds to an aperture motor calibration position in only one direction. In this case, the aperture motor position corresponding to the target aperture setting may be directly found based on the second correspondence without distinguishing the aperture change direction.

Step S1703: The electronic device 1500 captures an image after driving a rotor of an aperture motor to move to the aperture motor position, where the aperture motor is configured to change a size of a light transmission hole of a variable aperture module.

For example, the calibration code table shown in Table 3 is used as an example. A current aperture level is F1.4, and a target aperture level is F2.0. It is determined, according to Table 3, that an aperture motor position corresponding to F2.0 is a position corresponding to a code value 2400. The electronic device 1500 delivers a motor position instruction by using the aperture motor driver, to drive the rotor of the aperture motor to move to the position corresponding to a code value 2400, then captures an image by using a lens whose size of a light transmission hole is adjusted, and displays the captured image in the viewfinder frame.

It can be learned that, in this embodiment of this application, a gradient variable aperture image system with a plurality of aperture settings is implemented based on a correspondence that is between an aperture motor position and an aperture setting and that is obtained in a calibration phase.

The electronic device provided in this embodiment of this application may include a memory, a processor, and a computer program that is stored in the memory and that is run on the processor. When executing the computer program, the processor implements the method in any one of the foregoing method embodiments.

An embodiment of this application further provides a computer-readable storage medium. The computer-readable storage medium stores a computer program. When the computer program is executed by a processor, steps in the foregoing method embodiments can be implemented.

An embodiment of this application provides a computer program product. When the computer program product runs on an electronic device, the electronic device is enabled to implement the steps in the foregoing method embodiments when executing the computer program product.

An embodiment of this application further provides a chip system. The chip system includes a processor, the processor is coupled to a memory, and the processor executes a computer program stored in the memory, to implement the method in the foregoing method embodiments. The chip system may be a single chip or a chip module including a plurality of chips.

In the foregoing embodiments, the description of each embodiment has respective focuses. For a part that is not described in detail or recorded in an embodiment, refer to related descriptions in other embodiments. It should be understood that sequence numbers of the steps do not mean an execution sequence in the foregoing embodiments. The execution sequence of the processes should be determined based on functions and internal logic of the processes, and should not constitute any limitation on the implementation processes of the embodiments of this application. In addition, in descriptions of this specification and claims of this application, terms "first", "second", "third", and the like are merely intended for differentiated description, but shall not be understood as an indication or an implication of relative importance. Reference to "one embodiment" or "some embodiments" described in the specification of this application means that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner.

In conclusion, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

**Claims**

1. A calibration method, applied to an electronic device, wherein the method comprises:

   obtaining a first aperture size corresponding to a to-be-calibrated aperture setting;
   determining, based on a first correspondence, a target position that is of an aperture motor and that corresponds to the first aperture size, wherein the first correspondence is a relationship between an aperture size and an aperture motor position;
   obtaining a to-be-processed image, wherein the to-be-processed image is an image shot after a rotor of the aperture motor is driven to move to the target position, the to-be-processed image comprises a light transmission hole of a variable aperture module, and the aperture motor is configured to change a size of the light transmission hole;
   determining a second aperture size of the light transmission hole based on the to-be-processed image;
   if the second aperture size does not meet an error requirement, determining a next target position of the aperture motor based on the first correspondence and the second aperture size, and then returning to the steps of obtaining a to-be-processed image and determining a second aperture size of the light transmission hole based on the to-be-processed image; or
   if the second aperture size meets the error requirement, determining that the target position is an aperture motor calibration position corresponding to the to-be-calibrated aperture setting; and
   obtaining a second correspondence based on an aperture motor calibration position corresponding to each to-be-calibrated aperture setting, wherein the second correspondence is a relationship between an aperture setting and an aperture motor position.

2. The method according to claim 1, wherein the determining a second aperture size of the light transmission hole based on the to-be-processed image comprises:

   determining a first pixel area of the light transmission hole in the to-be-processed image;
   obtaining a first physical area of the light transmission hole based on a conversion coefficient and the first pixel area; and
   converting the first physical area into the second aperture size.

3. The method according to claim 2, wherein before the obtaining a first aperture size corresponding to a to-be-calibrated aperture setting, the method further comprises:

   obtaining a test chart image;
   determining a second pixel area of a target hole in the test chart image; and
   determining a ratio of a second physical area of the target hole to the second pixel area as the conversion coefficient.

4. The method according to claim 1, wherein the determining a next target position of the aperture motor based on the first correspondence and the second aperture size comprises:

   determining a difference between the second aperture size and a third aperture size, wherein the third aperture size is the first aperture size or a second aperture size corresponding to a previous target position;
   performing derivation on a relationship curve of the first correspondence, to obtain a target curve;
   determining a target value corresponding to the target position on the target curve;
   determining a target ratio of the difference to the target value; and
   adding the target ratio and the target position, to obtain the next target position.

5. The method according to claim 1, wherein the error requirement is that an absolute value of a difference between the second aperture size and the first passing aperture is less than or equal to a preset threshold, wherein

   when the absolute value of the difference between the second aperture size and the first aperture size is less than or equal to the preset threshold, the second aperture size meets the error requirement; and
   when the absolute value of the difference between the second aperture size and the first aperture size is greater than the preset threshold, the second aperture size does not meet the error requirement.

6. The method according to claim 1, wherein before the obtaining a first aperture size corresponding to a to-be-calibrated aperture setting, the method further comprises:

obtaining a set of to-be-measured locations, wherein the set of to-be-measured locations comprises at least one to-be-measured location, and the to-be-measured location is a location selected from a stroke range of the aperture motor;

obtaining a target image for each to-be-measured location, and obtaining, based on the target image, an aperture size corresponding to the to-be-measured location, wherein the target image is an image shot after the rotor of the aperture motor is driven to move to the to-be-measured location, and the target image comprises the light transmission hole of the variable aperture module; and

obtaining the first correspondence based on each to-be-measured location and the aperture size corresponding to each to-be-measured location.

7. The method according to claim 1, wherein the second correspondence comprises an aperture motor calibration position in a first direction and an aperture motor calibration position in a second direction that correspond to each to-be-calibrated aperture setting; and

the first direction is a direction from a wide aperture to a narrow aperture, and the second direction is a direction from the narrow aperture to the wide aperture.

8. The method according to claim 1, wherein the to-be-processed image captured each time is the image shot after the rotor of the aperture motor is driven to move from an initial position to the target position.

9. The method according to any one of claims 1 to 8, wherein an imaging error relationship of a calibration system of the variable aperture module is as follows: $d_{error} = 2 * d_{pixcelsize} * \beta_{lens}$, wherein $d_{pixcelsize}$ is a size of a photosensitive element of an image sensor of an imaging camera, $\beta_{lens}$ is a magnification ratio of a lens of the imaging camera, and the imaging camera is configured to capture the to-be-processed image.

10. A calibration system, comprising an optical imaging device and a processing device, wherein

the optical imaging device is configured to: obtain an image shooting instruction delivered by the processing device; capture a to-be-processed image in response to the image shooting instruction; and send the to-be-processed image to the processing device, wherein the to-be-processed image is an image shot after a rotor of an aperture motor is driven to move to a target position, the to-be-processed image comprises a light transmission hole of a variable aperture module, and the aperture motor is configured to change a size of the light transmission hole; and

the processing device is configured to: obtain a first aperture size corresponding to a to-be-calibrated aperture setting; determine, based on a first correspondence, a target position that is of the aperture motor and that corresponds to the first aperture size, wherein the first correspondence is a relationship between an aperture size and an aperture motor position; obtain a to-be-processed image; determine a second aperture size of the light transmission hole based on the to-be-processed image; if the second aperture size does not meet an error requirement, determine a next target position of the aperture motor based on the first correspondence and the second aperture size, and then return to the steps of obtaining a to-be-processed image and determining a second aperture size of the light transmission hole based on the to-be-processed image; or if the second aperture size meets the error requirement, determine that the target position is an aperture motor calibration position corresponding to the to-be-calibrated aperture setting; and obtain a second correspondence based on an aperture motor calibration position corresponding to each to-be-calibrated aperture setting, wherein the second correspondence is a relationship between an aperture setting and an aperture motor position.

11. The system according to claim 10, wherein the processing device is specifically configured to:

determine a first pixel area of the light transmission hole in the to-be-processed image;

obtain a first physical area of the light transmission hole based on a conversion coefficient and the first pixel area; and

convert the first physical area into the second aperture size.

12. The system according to claim 11, wherein the optical imaging device is further configured to capture a test chart image, and send the test chart image to the processing device; and

the processing device is further configured to: obtain the test chart image; determine a second pixel area of a target hole in the test chart image; and determine a ratio of a second physical area of the target hole to the second pixel area as the conversion coefficient.

13. The system according to claim 10, wherein the processing device is specifically configured to:

determine a difference between the second aperture size and a third aperture size, wherein the third aperture size is the first aperture size or a second aperture size corresponding to a previous target position;
perform derivation on a relationship curve of the first correspondence, to obtain a target curve;
determine a target value corresponding to the target position on the target curve;
determine a target ratio of the difference to the target value; and
add the target ratio and the target position, to obtain the next target position.

14. The system according to claim 10, wherein the error requirement is that an absolute value of a difference between the second aperture size and the first passing aperture is less than or equal to a preset threshold, wherein

when the absolute value of the difference between the second aperture size and the first passing aperture is less than or equal to the preset threshold, the second aperture size meets the error requirement; and
when the absolute value of the difference between the second aperture size and the first passing aperture is greater than the preset threshold, the second aperture size does not meet the error requirement.

15. The system according to claim 10, wherein the optical imaging device is further configured to: capture a target image of each to-be-measured location, and send the target image to the processing device; and
the processing device is further configured to: obtain a set of to-be-measured locations, wherein the set of to-be-measured locations comprises at least one to-be-measured location, and the to-be-measured location is a location selected from a stroke range of the aperture motor; obtain a target image for each to-be-measured location, and obtain, based on the target image, an aperture size corresponding to the to-be-measured location, wherein the target image is an image shot after the rotor of the aperture motor is driven to move to the to-be-measured location, and the target image comprises the light transmission hole of the variable aperture module; and obtain the first correspondence based on each to-be-measured location and the aperture size corresponding to each to-be-measured location.

16. The system according to claim 10, wherein the second correspondence comprises an aperture motor calibration position in a first direction and an aperture motor calibration position in a second direction that correspond to each to-be-calibrated aperture setting; and
the first direction is a direction from a wide aperture to a narrow aperture, and the second direction is a direction from the narrow aperture to the wide aperture.

17. The system according to claim 10, wherein the to-be-processed image captured each time is the image shot after the rotor of the aperture motor is driven to move from an initial position to the target position.

18. The system according to any one of claims 10 to 17, wherein an imaging error relationship of the calibration system is as follows: $d_{error} = 2 * d_{pixcelsize} * \beta_{lens}$, wherein $d_{pixcelsize}$ is a size of a photosensitive element of an image sensor of an imaging camera, and $\beta_{lens}$ is a magnification ratio of a lens of the imaging camera.

19. The system according to claim 18, wherein the optical imaging device comprises the imaging camera and a light source; and a lens of the imaging camera is a telecentric lens, and the light source is a collimated light source or a low-angle ring surface light source.

20. A variable aperture module-based photographing method, applied to an electronic device, wherein the method comprises:

obtaining a target aperture setting;
determining, based on a second correspondence, an aperture motor position corresponding to the target aperture setting, wherein the second correspondence is a relationship obtained by using the calibration method according to any one of claims 1 to 9, and is used to represent a relationship between an aperture setting and an aperture motor position; and
capturing an image after driving a rotor of an aperture motor to move to the aperture motor position, wherein the aperture motor is configured to change a size of a light transmission hole of the variable aperture module.

21. The method according to claim 20, wherein the second correspondence comprises an aperture motor calibration position in a first direction and an aperture motor calibration position in a second direction that correspond to each to-be-calibrated aperture setting; and the first direction is a direction from a wide aperture to a narrow aperture, and the second direction is a direction from the narrow aperture to the wide aperture; and

determining, based on the second correspondence, an aperture motor calibration position corresponding to a target aperture size comprises:

determining a movement direction of the aperture motor, wherein the movement direction is the first direction or the second direction; and

determining, based on the movement direction and the second correspondence, the aperture motor calibration position corresponding to the target aperture size.

22. An electronic device, comprising a memory, a processor, and a computer program that is stored in the memory and that is run on the processor, wherein when executing the computer program, the processor implements the method according to any one of claims 1 to 9 or claims 20 and 21.

23. A computer-readable storage medium, wherein the computer-readable storage medium stores a computer program, and when the computer program is executed by a processor, the method according to any one of claims 1 to 9 or 20 and 21 is implemented.

FIG. 1

FIG. 2

31

32

33

33

34

FIG. 3

Object-space focal plane          Image-space focal plane

FIG. 4

FIG. 5

FIG. 6

FIG. 7A

71

72

73

74

76

76

Face up test

Face down test

Horizontal forward test

76

75

75

FIG. 7B

**FIG. 7C**

**FIG. 8**

Image shooting instruction

Test chart image

Determine a pixel area B of a round aperture in the test chart image

Calculate a conversion coefficient:

$$f = \frac{A}{B}$$

FIG. 9

EP 4 478 290 A1

S1001

A processing device obtains a set of to-be-measured positions, where the set of to-be-measured positions includes at least one to-be-measured position, and the to-be-measured position is a position selected from a stroke range of an aperture motor

S1002

The processing device obtains a target image for each to-be-measured position, and obtains, based on the target image, an aperture size corresponding to the to-be-measured position, where the target image is an image shot after a rotor of the aperture motor is driven to move to the to-be-measured position, and the target image includes an aperture of a variable aperture module

S1003

The processing device obtains a first correspondence based on each to-be-measured position and an aperture size corresponding to each to-be-measured position

FIG. 10

FIG. 11

$$y = -2.0580E{-}17x^5 + 1.7080E{-}13x^4 - 5.4170E{-}10x^3 + 8.4730E{-}07x^2 - 1.1030E{-}03x + 4.4240E{+}00$$

$$R^2 = 1.0000E{+}00$$

FIG. 12

S1301

A processing device obtains a first aperture size corresponding to a to-be-calibrated f-number

S1302

The processing device determines, based on a first correspondence, a target position that is of an aperture motor and that corresponds to the first aperture size, where the first correspondence is a relationship between an aperture size and an aperture motor position

S1303

The processing device obtains a to-be-processed image, where the to-be-processed image is an image shot after a rotor of the aperture motor is driven to move to the target position, and the to-be-processed image includes an aperture of a variable aperture module

S1304

The processing device determines a second aperture size of the aperture based on the to-be-processed image

S1305

The processing device determines whether the second aperture size meets an error requirement

Yes

No

S1306

The processing device determines a next target position of the aperture motor based on the first correspondence and the second aperture size

S1307

The processing device determines that the target position is an aperture motor calibration position corresponding to the to-be-calibrated f-number

S1308

The processing device obtains a second correspondence based on the aperture motor calibration position corresponding to the to-be-calibrated f-number, where the second correspondence is a relationship between an f-number and an aperture motor position

FIG. 13

Function A: Calculate variable aperture opening size information

Function B: Calibrate a variable aperture

144

143

Image shooting instruction

To-be-processed image

Position instruction

142

141

FIG. 14

1500

Camera module [1503] — Processor [1501] — Memory [1502]

FIG. 15

Application layer

| Camera | Calendar | Maps | WLAN | Music | Messages |

| Gallery | Phone | Navigation | Bluetooth | Videos | ... |

Application framework layer

| Window manager | Content provider | Phone manager | Resource manager |

| Notification manager | View system | ... | |

System library

Android runtime

| Surface manager | Three-dimensional graphics processing library |

| Two-dimensional graphics engine | Media library | ... |

Kernel layer

| Display driver | Camera driver | Aperture motor driver |

| Audio driver | Sensor driver | ... |

FIG. 16

S1701

An electronic device 1500 obtains a target f-number

S1702

The electronic device 1500 determines, based on a second correspondence, an aperture motor position corresponding to the target f-number, where the second correspondence is a relationship between an f-number and an aperture motor position

S1703

The electronic device 1500 captures an image after driving a rotor of an aperture motor to move to the aperture motor position, where the aperture motor is configured to change a size of an aperture of a variable aperture module

FIG. 17

FIG. 18

## INTERNATIONAL SEARCH REPORT

| | International application No. |
|---|---|
| | **PCT/CN2023/083668** |

**A.    CLASSIFICATION OF SUBJECT MATTER**

G06T7/80(2017.01)i;  G01B11/00(2006.01)i

According to International Patent Classification (IPC) or to both national classification and IPC

**B.    FIELDS SEARCHED**

Minimum documentation searched (classification system followed by classification symbols)

IPC:G06T7/-; G01B11/-

Documentation searched other than minimum documentation to the extent that such documents are included in the fields searched

Electronic data base consulted during the international search (name of data base and, where practicable, search terms used)

CNTXT; CNABS; CJFD; ENTXTC; ENTXT; VEN; IEEE; CNKI: 光圈, 可变, 可变光圈, 标定, 步长, 档位, 电机, 马达, 迭代, 对应关系, 孔径, 通光, 图像, 面积, 位置, 误差, 转换系数, calibrat+, variable aperture, step, position, gear, motor, iteration, relation, clear aperture, image, error, conversion coefficient.

**C.    DOCUMENTS CONSIDERED TO BE RELEVANT**

| Category* | Citation of document, with indication, where appropriate, of the relevant passages | Relevant to claim No. |
|---|---|---|
| PX | CN 115482291 A (HUAWEI TECHNOLOGIES CO., LTD.) 16 December 2022 (2022-12-16) claims 1-23 | 1-23 |
| A | CN 111935413 A (HANGZHOU HIKVISION DIGITAL TECHNOLOGY CO., LTD.) 13 November 2020 (2020-11-13) description, paragraphs 0005-0014 | 1-23 |
| A | CN 111263142 A (KUNSHAN QTECH MICROELECTRONICS CO., LTD.) 09 June 2020 (2020-06-09) entire document | 1-23 |
| A | CN 109559352 A (GUANGDONG OPPO MOBILE COMMUNICATIONS CO., LTD.) 02 April 2019 (2019-04-02) entire document | 1-23 |
| A | US 2017310867 A1 (OLYMPUS CORPORATION) 26 October 2017 (2017-10-26) entire document | 1-23 |

☐ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 June 2023** | **22 June 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/083668**

| Patent document cited in search report | | | Publication date (day/month/year) | Patent family member(s) | | | Publication date (day/month/year) |
|---|---|---|---|---|---|---|---|
| CN | 115482291 | A | 16 December 2022 | None | | | |
| CN | 111935413 | A | 13 November 2020 | CN | 111935413 | B | 05 November 2021 |
| CN | 111263142 | A | 09 June 2020 | CN | 111263142 | B | 08 April 2022 |
| CN | 109559352 | A | 02 April 2019 | CN | 109559352 | B | 23 April 2021 |
| US | 2017310867 | A1 | 26 October 2017 | JP | 2017194601 | A | 26 October 2017 |
| | | | | JP | 6739979 | B2 | 12 August 2020 |
| | | | | US | 10574900 | B2 | 25 February 2020 |
| | | | | CN | 107390344 | A | 24 November 2017 |

Form PCT/ISA/210 (patent family annex) (July 2022)

**REFERENCES CITED IN THE DESCRIPTION**

**Patent documents cited in the description**

- CN 202210343947